(19) Europäisches Patentamt
European Patent Office
Office européen des brevets

(11) EP 1 554 621 B1

(12) EUROPEAN PATENT SPECIFICATION

(45) Date of publication and mention of the grant of the patent:
**23.09.2009 Bulletin 2009/39**

(51) Int Cl.:
***G02B 17/06*** *(2006.01)* ***G21K 1/06*** *(2006.01)*
***G03F 7/20*** *(2006.01)*

(21) Application number: **03769624.2**

(22) Date of filing: **17.10.2003**

(86) International application number:
**PCT/GB2003/004516**

(87) International publication number:
**WO 2004/036282 (29.04.2004 Gazette 2004/18)**

(54) **Optical imaging device designs for solar-powered flight and powergeneration**

Gestaltung optischer Abbildungseinrichtungen für solarbetriebenen Flug und Energieerzeugung

Conceptions de dispositifs d'imagerie iotique pour vol à l'énergie solaire et production d'énergie

(84) Designated Contracting States:
**AT BE BG CH CY CZ DE DK EE ES FI FR GB GR HU IE IT LI LU MC NL PT RO SE SI SK TR**

(30) Priority: **17.10.2002 GB 0224221**
**31.03.2003 GB 0307301**

(43) Date of publication of application:
**20.07.2005 Bulletin 2005/29**

(73) Proprietor: **Kemp, Malcolm, Hugh, David**
**London SE22 8UN (GB)**

(72) Inventor: **Kemp, Malcolm, Hugh, David**
**London SE22 8UN (GB)**

(74) Representative: **Gymer, Keith Francis et al**
**Page Hargrave**
**Southgate**
**Whitefriars**
**Lewins Mead**
**Bristol BS1 2NT (GB)**

(56) References cited:
**WO-A-01/69299**
**DE-A- 2 916 741**
**GB-A- 717 787**
**US-A- 2 684 015**
**US-A- 4 357 075**
**US-A- 4 655 555**

- **PATENT ABSTRACTS OF JAPAN vol. 006, no. 245 (P-159), 3 December 1982 (1982-12-03) & JP 57 141613 A (PIONEER KK), 2 September 1982 (1982-09-02)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 554 621 B1

## Description

The present invention relates to optical imaging arrangements. These include, in particular, arrangements that (1) are of very low mass per unit aperture area and which may have application to facilitate solar-powered flight (including space flight) via direct deflection of sunlight, via solar thermal propulsion or via the generation of electric power that is then used to generate thrust; (2) arrangements which may be used to facilitate the generation of electric power from sunlight for terrestrial purposes; and (3) arrangements adapted to facilitate other applications envisaged in the applicant's previous patent application WO 0169299 A1 referred to as PCT/GB01/01161 in the following text, entitled "Ultra-high resolution imaging devices".

The present invention provides methods of designing optical imaging arrangements comprising two mirror surfaces, as defined in Claim 1, and devices incorporating optical imaging arrangements constructed in accordance with the methods claimed. The methods are developments and adaptations, which build on the original basic principles described in PCT/GB01/01161.

(1) An arrangement according to the present invention can provide thrust by concentrating sunlight. The invention may be implemented in a variety of adaptations.

(a) Arrangements according to the present invention may be used as a "solar sail". In weightless conditions in outer space far from any planetary atmosphere it is possible to accelerate a vehicle by direct deflection of light. This is possible because individual photons of light possess momentum (proportional to their energy and hence frequency), pointing in the direction in which the photon is travelling. Thus the act of deflecting sunlight imparts momentum to the deflector (and to any vehicle attached to it). In practice any such solar sail can be expected to be hundreds of square metres in size, or larger. Although the acceleration available from such a sail is small (if the energy source is sunlight), it can operate continuously over long periods without using any internal fuel supplies. Therefore space vehicles powered by solar sails can, in principle, build up relatively high speeds. NASA seriously investigated solar sails in the 1960's as a possible means of achieving manned transportation around the solar system. It was even suggested that very high power lasers could be used instead of sunlight to propel a solar sail, increasing substantially the acceleration available and potentially facilitating interstellar travel. Actual test sails proved less encouraging, although recent advances in ultra-lightweight mirror fabrication technology mean that organisations such as NASA, Team Encounter and the Planetary Society are planning launches of space vehicles powered by solar sails in the next year or two. Traditional solar sail designs involve an approximately planar sail surface. Unless the sail is fantastically light, altering the orbit in which the vehicle travels around the sun requires the sunlight to be deflected in such a way as to provide thrust with a component perpendicular to the direction of the sun. Ideally a planar solar sail should be positioned so that the angle between the sun and the perpendicular to the sail surface is about 35.3°. This means that the surface area of a traditional solar sail has at least approximately 23% more surface area than the cross-section it presents to the incoming sunlight. Arrangements according to the present invention can reduce this cross-sectional disparity, down to perhaps 5% or lower, thereby offering mass and hence cost advantages over traditional solar sail designs. Moreover, the calculation from which the 35.3° figure is derived, itself contains some compromises, since the trajectory change created by any given photon is maximised if the photon is deflected through about 90° (which arrangements according to the present invention would permit for most photons striking it) rather than the 70.6° deflection supplied by such a positioning of a traditional solar sail. This compromise is not needed with arrangements according to the present invention, resulting in a further approximately 5% benefit over traditional solar sail designs. However, in arrangements according to the present invention, each ray of sunlight would be deflected three times rather than the once applicable to a traditional solar sail design. As practical mirrors do not have 100% reflectivity, there would therefore be a small relative loss in efficiency because of the extra reflections.

(b) Alternatively, arrangements according to the present invention may be adapted to concentrate sunlight so as to heat up some propellant that would then be expelled in much the same way as occurs in a rocket or jet engine. An advantage which may be obtained using such arrangements according to the present invention is the ability to concentrate sunlight to almost the maximum possible temperature without contravening the Second Law of Thermodynamics, i.e. to close to the temperature of the sun's photosphere (circa 5800K). This temperature is higher than any typically available via chemical rocketry (indeed it is so high that one might need to limit the actual temperature to which the sunlight is concentrated to avoid melting whatever material was used to house the engine chamber, i.e. to keep it below probably circa 3700K, this being close to the melting point of tungsten or carbon). Hydrogen is probably the optimal rocket propellant to use because it has the lowest molecular mass of any gas, and hence provides the highest specific impulse (although if it is desired to avoid the use of inflammable propellant then helium might be a useful alternative). A high specific impulse increases the thrust available per unit mass of propellant. In the atmosphere, the propellant gas could of course be air, which would eliminate the need for the vehicle to carry any propellant. The specific impulse of such a "solar thermal" propulsion arrangement, limiting the temperature as above, might be as high as circa 1000 seconds (or perhaps higher, see below), versus the 450 seconds delivered by a liquid hydrogen/liquid oxygen chemical rocket as used by, say, the NASA space shuttle), i.e. with the hydrogen being expelled at circa 10° $ms^{-1}$.

Solar thermal propulsion has been proposed for the Solar Orbit Transfer Vehicle (SOTV), an experimental design developed fairly recently by Boeing under a $48m contract from the US Air Force Research Laboratory, Kirtland Air Force Base, New Mexico. The SOTV envisaged concentrating sunlight using parabolic mirrors into a cavity in which hydrogen gas was heated to circa 2300K, achieving a specific impulse of 750 to 850 seconds. In principle, sunlight can be concentrated using arrangements according to the present invention to a significantly higher temperature, increasing the specific impulse, and hence reducing the required propellant mass and probably the mass of the rocket engine (because it can be smaller). The surface area of a mirror arrangement according to the present invention can be expected to be materially smaller than the surface area of the mirror arrangement envisaged by NASA for the SOTV (considering the images and information presently available from NASA).

In the vicinity of the earth, arrangements according to the present invention would concentrate sunlight onto an area that was roughly 1/40,000$^{th}$ of the surface area of the mirrors, into which the propellant would be injected at high pressure and heated. An advantage of solar thermal propulsion is that the specific impulse it delivers can be varied in a controlled way anywhere between close to zero and the relevant upper limit (probably circa 1000 seconds for the present invention, but see below), by lowering the temperature to which the propellant is heated (e.g. by increasing the flow of propellant through the engine) and hence lowering the speed with which it is ejected. It should in principle also be possible to achieve an even higher specific impulse from a solar thermal propulsion arrangement than that referred to above by further heating the propellant downstream of the rocket or jet chamber. Like chemical rocket engines, conventional jet engines work by expelling gas that has been heated by a chemical reaction. The main conceptual difference is that they burn oxygen sourced from the air rather than stored within the vehicle. A way of increasing the thrust of a jet engine is to include "after-burn", i.e. to ignite more fuel downstream of the air intake and compressor. This increases the speed at which the propellant is ejected. Typically it is not energy efficient to do this so afterburners are generally confined to military jets and used only when added thrust is particularly helpful. In a classical chemical rocket or solar thermal engine, the propellant is heated to a high temperature and pressure in the equivalent of the combustion chamber. The gas then passes through a narrow rocket throat and subsequently expands as it passes through the rocket nozzle, gaining ejection speed as it does so. The nozzle needs to allow the gas to be expelled without obstacle, as to do otherwise would reduce the ejection speed. However if it were possible to heat the gas during this expansion phase without introducing obstacles to its free flow, then this would allow the gas to expand further increasing the ejection speed. This might be achievable if the nozzle were itself long and at a high temperature and so radiated energy into the expanding gas. This may be facilitated by embedding most of the nozzle, possibly in a spiral shape, within a slab of material onto which the sunlight was being concentrated. The introduction of trace heat absorbent substances into the heated gas may then improve the radiative heat transfer from the nozzle sides to the gas within.

(c) Further arrangements according to the present invention may be used to concentrate sunlight and to convert this energy into electric power. Vehicle thrust could be indirectly provided by consumption of this electric power. The very high temperatures to which the arrangements according to the present invention can concentrate sunlight permit some relatively unusual approaches to converting sunlight to electric power, for example via thermionic, thermoelectric or closed cycle heat engine electric power generation. Of particular interest is the potential coupling of this sort of concentrator with thermionic power generation. Thermionic power generation is only practical at very high temperatures (which arrangements according to the present invention can deliver, see above). It permits a very high rejection temperature and, in principle, should require a relatively low mass per unit of electric power generated. For aeronautical or astronautical applications, the larger the power output the more likely thermionic power generation is to be cost effective in comparison with solar photovoltaic arrangements according to the US National Research Council Committee on Thermionic Research and Technology: "Thermionics Quo Vadis? An assessment of the DTRA's Advanced Thermionics Research and Development Program", National Academy Press (2001). According to this assessment, thermionic power should be able to provide conversion efficiencies of at least 20 to 25% if the input temperature was 2000K and the output temperature was 1100K (which is pretty high considering that the maximum possible efficiency it could deliver whilst not contradicting the Second Law of Thermodynamics given these input and output temperatures is (2000-1100)/2000 = 45%). Higher efficiencies should be possible if the input temperature was closer to those achievable using arrangements according to the present invention (up to circa 3700K). Alternatively, if an arrangement according to the present invention were to be used in a manner adapted for solar thermal propulsion, a suitable liquid or gas might be injected into a heat exchanger at the focal point of the arrangement, but instead of being expelled to provide thrust, it might be recycled via a closed heat engine to generate electric power. Ways of creating thrust from electric power generated in these (or other) fashions include:

- In air, the electricity thus generated might be used to drive propellers or to provide a heat source for the equivalent of a jet engine. The optical arrangement may, for eample, be embedded within a transparent inflated balloon, with the balloon providing uplift and rigidity and with propellers used to control where the vehicle went. Such a vehicle may thus be able to stay indefinitely in approximately the same position in the air (a potentially desirable characteristic if the vehicle were being used as, say, a radio base station for communications purposes).

- In outer space, the electricity thus generated might be used to power an ion drive or other relatively advanced ways of converting electricity into thrust. Hall effect ion thrusters have flown on several Russian spacecraft and can deliver specific impulses of circa 1800 seconds. Even higher specific impulses (2000 to 4000 seconds) are available from gridded ion engines, typically using xenon as propellant. Such engines have flown on several commercial satellites. In a gridded ion engine, the ions are accelerated by a pair of gridded electrodes, and are then neutralised by electrons emitted by a further component, to prevent a space charge from building up around the satellite, which would otherwise largely neutralise the acceleration being sought.
- In outer space it may be possible to achieve an even higher specific impulse by creating a "balanced" ion engine that ejects equal amounts of positive and negative ions. The ejected ions should then be attracted to each other rather than back towards the spaceship, which is the usual difficulty that an ion engine faces. Particularly attractive ions to use in this context might be $H_2^+$ and $H_2^-$ since $H_2$ has the lowest molecular mass of any easily available gas. These ions can therefore be accelerated to a particularly high velocity per unit of applied electric field. The mass of a proton is 938 MeV, so that the speed that either of these ions might reach if accelerated by a 1 MV electric field would be circa 3% of the speed of light, i.e. circa $10^7$ $ms^{-1}$, or if by a 10 kV electric field to circa $10^6$ $ms^{-1}$ (i.e. providing a specific impulse of circa $10^5$ seconds). Accelerating the ions to this speed is essentially an exercise in taking existing particle accelerator technology and making it as lightweight as possible. Whilst it is not as propellant-efficient as a solar sail (which needs to carry no propellant whatsoever), the amount of propellant such an ion engine might use would be probably be so small that it would not be a material constraint on flight trajectories. Such an engine powered by a suitable solar power collector might therefore provide substantially higher acceleration than an equivalent solar sail arrangement of equivalent area although of course it would be more complicated in construction.

(d) Another advantage offered by arrangements according to the present invention is that they may be used to facilitate several of the above means of solar-propulsion in the same vehicle at different times during its journey. The same optical arrangement may be reused within the same flight with any of the above ways of creating thrust. In conjunction with a means of converting solar power into electricity, it can also provide for other electric power requirements for the vehicle (e.g. a commercial satellite will require electric power to function once in orbit). For example, a solar-powered orbital launch vehicle may be created using an optical arrangement in line with the present invention. The optimum use of propellant involves increasing the specific impulse as the vehicle's speed increases. With traditional rocketry, this is usually rather difficult and, in general, the faster a traditional chemical rocket accelerates the better, as the drag imposed by gravity is correspondingly lower. But with solar powered flight, there is a more complex trade-off, since the longer the flight the more the energy that can be collected to provide thrust. Considering the use of solar thermal propulsion as above to launch a vehicle into earth orbit from rest close to the surface of the earth, and assuming for simplicity also that air resistance could be ignored, the following analysis can be made. If the mass of propellant is circa 7 times the mass put into orbit then it appears to be optimal for such a solar powered orbital launch vehicle initially to expel propellant at a speed of approximately 1,400$ms^{-1}$ in a direction that is about 45° (downwards) to the vertical. As the flight progresses and the vehicle speeds up, it appears to be optimal for the propellant to continue to be expelled at circa 45° to the vertical but for the speed at which it is expelled to be increased continuously until the maximum possible expulsion velocity is reached (probably circa $10^4$ $ms^{-1}$ using arrangements according to the present invention, and ignoring the possibility of "after-burn"). This approach would appear to require circa 70 kW of power per kg lifted into orbit (assuming 100% efficiency of conversion of sunlight into thrust) and a flight lasting circa 800 seconds. Perhaps twice the power per kg would be needed if the propellant were expelled at a fixed velocity relative to the vehicle, showing the inherent advantages of an engine able to deliver a variable specific impulse. In bright sunlight, each 1 $m^2$ of solar collector perpendicular to the sun's rays could collect circa 1.4 kW of solar power (in the vicinity of the earth). Each 1 kg of mass lifted into orbit would then, in theory, require circa 50 $m^2$ of collector aperture area (and an only slightly larger overall mirror surface area with the present invention). NASA has reportedly developed materials that can be used to make robust solar sails that weigh less than 5 $gm^{-2}$. For solar thermal propulsion engines that are at least, say, 50% efficient in a thermodynamic sense (which is not impossible given the probable relevant input and output temperatures involved in the solar thermal engine), then it would be feasible for a mirror arrangement according to the present invention, in conjunction with a solar thermal propulsion engine, to launch itself, and roughly the same mass again, into earth orbit (albeit that mass would have to include the engine and other elements of the vehicle superstructure). Such a launch methodology has the further advantage of being potentially fully reusable and, if desired, of then being able to travel to most of the rest of the solar system by reusing the mirror arrangement as a solar sail (or by using it to facilitate electric power generation which then powers an ion engine).

(e) Of course, a disadvantage that arrangements according to the present invention would potentially present in the context of a solar-powered orbital launch vehicle is that mirrors of the necessary size would generate a very high air resistance if the vehicle were travelling at any reasonable speed within the earth's atmosphere. This would be less relevant if the solar thermal engine could be used to heat up air within the atmosphere (in a manner akin to a jet engine), switching to internally carried propellant on leaving the atmosphere. But, the calculation in (d) suggests that some further

improvement in the mass per unit area of the relevant mirrors would probably still be needed before it would be realistic at present to expect to be able to use a solar thermal engine unaided to launch a vehicle into orbit. A more practical suggestion, at the present time, would be for the vehicle to build up speed within the atmosphere using a chemical rocket (or jet engine) and only after leaving the atmosphere to switch to solar thermal propulsion. To reduce vehicle mass it would be desirable for the same engine to be used for both the chemical rocket/jet engine stage and the solar thermal propulsion stage. This launch strategy also implicitly takes advantage of the typically lower specific impulses that chemical rockets/jet engines might generate, which are more suited to use earlier on in such a flight. For example, if chemical rockets were used to reach one-half orbital speed, i.e. circa 3,900 $ms^{-1}$ (a speed that should be fast enough to lift the vehicle out of the earth's atmosphere), the chemical rockets would have delivered one-quarter of the kinetic energy needed to reach orbital velocity. The required area of a solar power collector to provide the solar thermal propulsion component to make up the difference would fall by around 60-75% making a partially solar-powered orbital launch vehicle (that might still be fully reusable) rather more plausibly within the reach of currently available technology. If the chemical rocket imparted a speed of 5,000 $ms^{-1}$ (still less than half the kinetic energy required to reach orbit) then the required power to mass ratio from the solar powered stage falls by nearly another 50%. It should be noted that air resistance is also not necessarily always disadvantageous - the mirrors forming the solar collectors would probably need to be quite flexible to be light enough for this sort of purpose. This means that they might also be able to be used as parachutes on re-entry.

(2) For terrestrial power generation purposes, arrangements according to the present inventions can be used to concentrate sunlight and make the energy available by similar methods as described in (1)(c) above. An advantage of arrangements according to the present invention is that the solar concentrator can be made of low mass per unit area materials, which should reduce manufacturing cost. For example, mirrors forming the optical arrangement could be embedded within an inflated balloon. If filled with a lighter than air gas then it is only necessary to have three tethers to be able (by changing the lengths of the tethers) to point the concentrator in a wide variety of directions. This would facilitate tracking of the sun, which would be necessary to maximise solar energy production. A large arrangement might favour use of a thermionic power generator over other ways of converting the concentrated sunlight into power.

(3) Applications envisaged in the applicant's previous patent application PCT/GB01/01161 entitled "Ultra-high resolution imaging devices" are further facilitated using arrangements according to the present invention because these provide alternative ways of creating ultra-high numerical aperture imaging devices. Such applications include the following (and some others that have already been examined in more detail as above):

- Ultra-high resolution optics, including those that potentially circumvent the Rayleigh resolution criterion, which are particularly attractive for high resolution photolithographic purposes, including semiconductor microchip fabrication.
- Concentration or projection of light or other waves (including potentially other electromagnetic waves or sound waves) or physical entities satisfying equivalent 'ballistic' equations of motion. In a highly rarified atmosphere, individual gas molecules might be expected to behave in this sort of ballistic manner, which may enable the present invention to facilitate the concentration of gas in the upper atmosphere, again potentially facilitating powered flight.
- Structures where the mirrors are not inherently rigid, but are inflated or rotated in operation in order to attain or retain their required shapes.
- Interlinking of optical networking components.
- Variants in which the shapes of the mirrors are further modified to compensate for higher order aberrations by deviating from the aplanatic ideal in such a way that light or other waves (or other physical entities satisfying "ballistic" equations of motion) coming from a circular or far away spherical object primarily falls within a circular shaped image, the circle being smaller than the shape of the image that would be formed by the corresponding ideal aplanatic arrangement.
- Variants which comprise one or more additional mirrors and/or refracting or diffracting surfaces, adapted to exhibit improved aberration characteristics.

Aspects of the present invention will now be described in detail and by way of example with reference to the accompanying drawings, in which:

Figure 1 and 2 are cross-sectional representations of a two-mirror design for an ultra-high resolution imaging device as described in the applicant's previous patent application PCT/GB01/1161.

Figures 3 to 17 are cross-sectional representations of alternative two-mirror embodiments according to the present invention.

Figure 18 is a perspective representation of a solar thermal propulsion arrangement according to the present invention using the two-mirror design of Figure 17.

Figure 19 is a perspective representation of a corresponding arrangement to that shown in Figure 18, employed as a solar sail.

Figure 20 is a perspective representation of an arrangement according to the present invention used to facilitate solar power generation via a tethered balloon structure.

Figures 21 and 22 are perspective views from two different angles of the mirror surfaces of which Figure 17 is a cross-section.

The method of the present invention is directed principally at identifying new ways of positioning a rotationally-symmetric, two-mirror arrangement that is capable of focusing electromagnetic radiation (or other sorts of waves) to almost the thermodynamic upper limit. As the layout is rotationally symmetric, it is possible, without loss of generality determine its structure by considering a cross-section through the axis of symmetry (say in the *xy*-plane), with the *x*-axis being taken to be the axis of symmetry. For a two-mirror layout to exhibit first order aplanatism when creating an image on the plane $x = 0$ and centred on the origin, it is sufficient that the following conditions are satisfied:

(a) that the device is rotationally symmetric around the x-axis, with the object plane (say at $x = f$);

(b) that it satisfies the sine criterion; and

(c) that all light rays emanating from the point $(f,h,0)$ in the object plane that reach the image plane having travelled in the plane $z = 0$ need to go through a single point in the image plane, say $(0,ZBb,0)$, for all sufficiently small $h$ (B being the degree of magnification the device produces and hence independent of $h$, and $Z$ being $\pm 1$, depending on whether the image is inverted or not).

The reason for sufficiency is that (a) and (c) taken together are equivalent to forming a crisp image (aplanatic of order 1) for rays remaining in a cross-section through the axis, and the further imposition of (b) means (for the right sign of $Z$) that the device continues to form a crisp image even if the rays do not remain wholly within this cross-section.

Thus the positioning of each consecutive point on each of the two mirrors may be iteratively determined as follows:

(a) At the $t$'th iteration, the mirrors are positioned so that a light ray starting at exactly the object point $(f, 0)$ will go through the image point (0, 0), after striking the first mirror at $M_1(t)=(m_{1,x}(t),m_{1,y}(t))$ and the second mirror at $M_2(t) = (m_{2,x}(t),m_{2,y}(t))$. The angle that the two mirrors make to the $x$-axis at the $t$'th iteration can be found by geometry, given behaviour of light rays when they are reflected off of surfaces. These angles then define the tangents to the two mirrors at this step in the iteration.

(b) The position of $M_2(t+1)$ is found so that if a light ray starts at $(f, h)$, strikes the first mirror at $M_1(t)$ and the second mirror at $M_2(t+1)$ then it passes through $(0, ZBh)$, for a suitable constant B (the magnification of the arrangement), and a suitable sign $Z = \pm 1$, $h$ small (positive or negative). We apply the additional constraint that $M_2(t+1)$ must be on the tangent to the second mirror as identified in (a), which means that the (unique) position of $M_2(t+1)$ can be found by geometry.

(c) The position of $M_1(t+1)$ is found so that if a light ray starts at $(f, 0)$, strikes the first mirror at $M_1(t+1)$ and the second mirror at $M_2(t+1)$ then it passes through (0, 0). Again we apply the additional constraint that $M_1(t+1)$ must be on the tangent to the first mirror as identified in (a), which means that the (unique) position of $M_1(t+1)$ can also be found by geometry.

(d) The angles that the mirrors make to the $x$-axis at the $(t+1)$'th iteration and hence their tangents are then up-dated as per (a), and the iteration repeated.

In the limit as $h \to 0$ this approach defines the shape of two surfaces that together form a perfectly aplanatic (of order 1) imaging mirror arrangement. The mathematics can be restated as follows:

(a) $M_0(t) \equiv (m_{0,x}(t),m_{0,y}(t))$ and $M_3(t) \equiv (m_{3,x}(t), m_{3,y}(t))$ define the positions of the centres of the object and image planes respectively (so $M_0(t) \equiv (f,0)$, $M_3(t) \equiv (0,0)$ say).

(b) $d_i(t)$ (for $i = 0, ..., 2$) is the angle that a ray from $Mi(t)$ to $M_{i+1}(t)$ makes to the $x$-axis, i.e.

$$d_i(t) = \arctan\left(\frac{m_{i+1,y}(t) - m_{i,y}(t)}{m_{i+1,x}(t) - m_{i,x}(t)}\right)$$

(c) $p_i(t)$ (for $i = 0, ..., 2$) is the distance between $M_i(t)$ and $M_{i+1}(t)$, i.e.

$$p_i(t)=\sqrt{\left(m_{i+1,x}(t)-m_{i,x}(t)\right)^2+\left(m_{i+1,y}(t)-m_{i,y}(t)\right)^2}$$

(d) $a_i(t)$ is the angle that a tangent to the $i$'th surface makes to the $x$-axis, taking $a_0(t)$ and $a_3(t)$ to be the angles that the object and image planes make to the $x$-axis (being 90° for all $t$ for the surfaces to be rotationally symmetric about the $x$-axis), i.e. for reflection (for $i$ = 1 and 2):

$$a_i(t)=\frac{d_i(t)}{2}+\frac{d_{i-1}(t)}{2}$$

(e) The values of $m_{i,x}(0)$ and $m_{i,y}(0)$ (for $i$ = 1 and 2) are chosen so that the resulting mirror layout satisfies the sine criterion. For a far away source (say along the negative $x$-axis, say $f = -10^9$) we can without loss of generality set $b$, a scale parameter, equal to unity, setting $B = b/p_0(0) = 1/p_0(0)$. The sine criterion is then satisfied if:

$$m_{1,y}(0)=\pm\frac{m_{2,y}(0)}{\left(m_{2,x}(0)^2+m_{2,y}(0)^2\right)^{1/2}}$$

(f) It is possible to iterate either from shallower angles to more oblique angles, or vice versa, and to switch between the two by using as seed values later iterated results and reversing the sign of $h$. If the iteration is started from highly oblique angles then $m_{2,x}(0)$ may be chosen equal to a small number close to zero, say $10^{-9}$, and we can choose $m_{1,x}(0) = q_1$ and $m_{2,y}(0) = q_2$, where $q_1$ and $q_2$ are arbitrary real numbers (positive or negative). Then $m_{1,y}(0)$ would need to be $\pm 1$ for the initial parameters to satisfy the sine criterion. Without loss of generality, $m_{1,y}(0)$ may be chosen to be -1.

(g) The choice of the sign $Z$ is made so that the sine criterion remains satisfied as $t$ changes. Only one choice will work depending on the layout, for the two-mirror layouts being analysed here and, if $m_{1,y}(0) = -1$, then the correct choice will generally be $Z = \mathrm{sgn}(m_{2,y}(0))$.

(h) The values of $M_i$(t) are then updated as follows for a small value of $h$ (which can also be positive or negative):

$$M_i(t+1)\equiv\begin{pmatrix}m_{i,x}(t+1)\\ m_{i,y}(t+1)\end{pmatrix}=M_i(t)+w_i\begin{pmatrix}\cos(a_i(t))\\ \sin(a_i(t))\end{pmatrix}h$$

where $r_{i-1}(t) = \sin(a_{i-1}(t)-d_{i-1}(t))$ $s_i(t) = \sin(a_i(t)-d_{i-1}(t))$ and where

$$w_2=\frac{p_1r_0}{p_0s_2}\quad w_1=-ZB\frac{p_1s_3}{p_2r_1}$$

(i) The iteration is ended no later than when light rays would cease to be able to pass freely through the mirror arrangement, after it has been rotated as in (j).

(j) The complete, three-dimensional mirror surfaces are found by rotating the curves produced above around the $x$-axis.

The visual appearance and characteristics of mirror layouts defined according to the above iterative process will vary according to the signs of $q_1$, $q_2$ and $h$. The applicant has found that the visual appearance and characteristics of the mirror layouts will also normally depend on whether abs($q_2$) is larger or smaller than unity., In most instances, there is a discontinuity in the feasible angle ranges that the layouts permit rays to strike the image plane if abs($q_2$) is altered from being slightly below 1 to being slightly above 1. Such a discontinuity exists in 6 of the 8 possible combinations of signs of $q_1$, $q_2$ and $h$. The only arrangements where there is no such discontinuity are those where $q_1$ is negative and $q_2$ is positive. Thus the above iterative formulae in principle describe 14 possible classes of mirror layout, depending on the sign of $q_1$, $q_2$ and $h$ and (unless $q_1$ is negative and $q_2$ is positive) whether abs($q_2$) is smaller or larger than unity.

Within each class, there are further variations available by changing the values of $q_1$, $q_2$ subject to each retaining the sign appropriate to the respective class definition. The above approach differs from the method described in PCT/GB01/01161 in several respects, including:

- The description and figures contained in PCT/GB01/01161 all involve iterations which, if restated in the above form, would involve seeding the iterative process with $q_1$ negative, $q_2$ positive and $h$ positive, which produces mirror arrangements of the sort illustrated in Figures 1 and 2. It can be seen that the visual appearance (and the behaviour of the relevant ray traces) of most of the new types of mirror layout produced according to the present invention are significantly different in nature to those previous arrangements. For example, in 8 of the 14 examples of new arrangements, the focal plane is between the two mirrors, rather than being beyond the second (inner) mirror as was the case in the arrangements of Figures 1 and 2 and as described in PCT/GB01/01161 where the method indicated that the first mirror, $M_1$, would be nearest to the object and the second mirror, $M_2$, would be nearest to the image. A high proportion of the new mirror layouts illustrated in Figures 3 to 16 do not satisfy this requirement. In 4 of the new arrangements, the focal plane is also closer to the object than either mirror.
- Unexpectedly, a number of the new arrangements appear potentially much more efficient than those in PCT/GB01/01161 for solar energy purposes, because they have much smaller ratios of surface area to aperture area. This applies in particular to the arrangements illustrated in Figures 3 and 4, and also to a lesser extent, to those illustrated in Figures 5 and 6. The arrangement of these more efficient layouts was not predicted in the description of the arrangements in PCT/GB01/01161.
- The description of how to seed the original iterative formulae in PCT/GB01/01161 indicated that $m_{1,x}(0)$ and $m_{2,x}(0)$ should only differ by an infinitesimal amount for the shallowest feasible ray angle falling onto the image plane. This requirement is met by the class of mirror configurations originally described in PCT/GB01/01161, where $q_1$ is negative, $q_2$ is positive and $h$ is positive (illustrated in Figures 1 and 2), but is not generally met by the new arrangements according to the present .invention. Surprisingly, there is one exception, which occurs where $q_1$ is negative, $q_2$ is negative, $h$ is negative <u>and</u> abs($q_2$) is less than one. This type of arrangement is illustrated in Figure 9. Interestingly and unexpectedly, the resulting arrangement is visually similar to the two-mirror arrangements first described in PCT/GB01/01161, although obtained via a different route.
- The description in PCT/GB01/01161 also indicated that there were two parameters that defined the shape of the mirror layout contained in PCT/GB01/01161, which it took as $m_{2,y}(0) = k$ and $m_{2,x}(0) = -q$. The present analysis provides for variation in accordance with three relevant parameters, since it introduces a further dependency on the sign of $h$. The two parameters $q$ and $k$ in PCT/GB01/01161 carry out a similar role to $q_1$ and $q_2$ in the above analysis. The disclosure in PCT/GB01/01161 only envisaged instances where $k$ was positive and the sign of $q$ was negative. These correspond to the same type of layouts as those shown in Figures 1 and 2 where $q_1$ is negative and $q_2$ is positive.
- PCT/GB01/01161 was primarily directed towards high-resolution optics, particularly for high precision photolithography. The type of high numerical aperture imaging arrangement described in PCT/GB01/01161 is particularly suited to such purpose because all of the optical components are on the same side of the surface onto which the image is being projected. A particular subset of the sort of layout illustrated in Figure 1, that was also given prominence in PCT/GB01/01161, was the arrangement where the two mirrors can be joined up to form a single surface.

The iterative process according to the method described in the present invention provides for alternative and additional arrangements to those set out in PCT/GB01/01161 in that it allows for each of the signs of $q_1$, $q_2$ and $h$ to be changed to be either positive or negative and takes account of arrangements in which abs($q_2$) can be larger or smaller than unity, leading to unexpected and unanticipated additional possible types of two-mirror layouts all of which, in principle, may be able to approach close to the thermodynamic upper limit, in that they permit rays to strike the image plane from highly oblique angles. A selection of these new arrangements according to the present invention is illustrated in Figures 3 to 17.

In each of Figures 1 to 17, the solid lines are cross-sections of the mirrors themselves, and the dotted lines are the paths of light rays from the object to the image passing through extremities of the mirror arrangement. One extremity is the ultra-highly-oblique ray that effectively defines the start of the iteration process referred to above. The other extremity is the upper limit in accordance with step (i) in the iteration. Clearly, it would be possible to limit the iteration to a smaller range of angle spans by starting the iteration later or finishing it sooner than implied in the example Figures.

The original type of mirror arrangement referred to in PCT/GB01/01161 normally has a relatively high coverage of possible angle spans, and a relatively low second order aberration factor. The latter factor assesses the extent to which, say, light from the rim of the sun's outline in the sky would not fall exactly where the thermodynamic optimum would require (i.e. where it would fall if the mirror arrangement were aplanatic to higher than 1st order). For an ultra-high resolution imaging device, it is important that image aberration is kept as low as possible. For solar energy purposes, if the aberration factor is material, it is possible to improve the concentration characteristics of the mirror layout either

by adjusting modestly the iteration process (so that circular objects fall more precisely on the same circle throughout the iteration process) or by adding more surfaces at which the light is deflected as it passes from object to image. The equivalent characteristics for the other types of layout will depend on the precise values of $q_1$ and $q_2$ used to seed the iterative process.

Further modifications to the formulae according to the present invention can also be introduced by making equivalent variations to those previously described in PCT/GB01/01161 to handle refractive or diffractive arrangements. These involve changing the formulae used to define $a_i(t)$ in (d) and $W_1$ and $W_2$ in (h) to reflect how light rays are deflected at a refractive or diffractive surface rather than a reflective surface.

Likewise, equivalent adaptations to those set out in PCT/GB01/b1161 can be made to handle the inclusion of additional reflecting, refracting or diffracting surfaces to improve the aberration characteristics of the new arrangements according to the present invention.

For convenient comparison of relevant parameters and characteristics of the original two-mirror layout (of PCT/GB01/01161) with the new arrangements provided according to the present invention, Figures 1 and 2 (representative of the original arrangements) and 3 to 16 have been derived by choosing standardised values of ±2 and ±0,2 (or ±3 when considering cases where abs($q_2$) is larger than b, i.e. unity) respectively for the seed parameters. Table 1 provides a numeric comparison of the characteristics:

**TABLE 1**

| Figure | $q_1$ | $q_2$ | Sign of *h* | effective aperture area | aberration factor | mirror surface area |
|---|---|---|---|---|---|---|
| *1* | *-2* | *0.2* | + | *90%* | *0.020* | *2.86* |
| *2* | *-2* | *3* | + | *27%* | *0.007* | *43.01* |
| **New arrangements:** | | | | | | |
| 3 | 2 | -0.2 | - | 96% | 0.059 | 1.03 |
| 4 | 2 | 0.2 | + | 96% | 0.079 | 1.06 |
| 5 | 2 | 0.2 | - | 89% | 0.017 | 1.56 |
| 6 | 2 | -0.2 | + | 50% | 0.021 | 2.74 |
| 7 | -2 | 0.2 | - | 88% | 0.038 | 3.24 |
| 8 | -2 | -0.2 | + | 85% | 0.077 | 3.51 |
| 9 | -2 | -0.2 | - | 41% | 0.013 | 7.81 |
| 10 | 2 | 3 | + | 85% | 0.008 | 17.46 |
| 11 | 2 | 3 | - | 29% | 0.009 | 41.80 |
| 12 | 2 | -3 | + | 77% | 0.007 | 31.57 |
| 13 | 2 | -3 | - | 77% | 0.005 | 16.39 |
| 14 | -2 | 3 | - | 57% | 0.012 | 23.46 |
| 15 | -2 | -3 | + | 54% | 0.035 | 26.91 |
| 16 | -2 | -3 | - | 80% | 0.002 | 32.71 |

Note:

In the above table the characteristics on the right hand side are calculated as follows:

*effective aperture area* = area of first mirror perpendicular to sun's rays, expressed as a proportion of the maximum possible were the angle span of rays falling onto the image plane to be the complete range from wholly oblique to exactly perpendicular to the image plane. The higher this is, the closer to the thermodynamic upper temperature limit such a concentrator can approach.

*aberration factor* = average maximum second order degree of aberration for sunlight in the vicinity of the earth (i.e. for a far away source subtending approximately a semi angle of 0.267°). The degree of aberration is calculated using the formulae described in PCT/GB01/01161, i.e. it is how far away from the aplanatic ideal that an extreme

radial ray from the edge of the sun on average strikes the image plane divided by the distance of this aplanatic ideal imaging point from the centre of the image plane.

*mirror surface area* = the total surface area of the two mirrors combined as a multiple of the effective aperture area. The smaller is this figure, the less is the mirror surface area required per unit of power delivered, and therefore all other things being equal, the less the mirror arrangement will weigh.

Figures 1 and 2 and Figures 3 to 16 are plots of the cross-sections through the axis of rotation of different types of two mirror imaging layouts that focus objects infinitely far away along the negative *x*-axis, are aplanatic and have the potential to achieve a very high numerical aperture because the permit rays to strike the image plane at highly oblique angles, the different types being characterised by different types of choices concerning three parameters involved in the iterative process referred to above.

Figure 17 is another example of the type of mirror layout illustrated in Figure 3 but with different initial parameters used in the iterative formulae used to identify how the two mirrors are positioned.

For most of the proposed uses of the present invention, it is unlikely to be desirable for abs($q_2$) to be larger than unity, since it would significantly increase the overall surface area of the mirrors, and hence the weight of any corresponding solar power collector. The original arrangements of Figure 1 and Figure 2 (even more so) are also relatively undesirable for such purposes because they have a relatively high ratio of actual mirror area to effective collector aperture perpendicular to the sun's rays, increasing the weight of the collector per unit power collected. The two lightest mirror layouts shown, and therefore the ones most likely to be helpful for most of the proposed uses of the present invention, are those in Figures 3 and 4. However, layouts akin to Figure 4 would have the disadvantage that the sunlight would pass very close to the positive *x*-axis on its way towards the image. Any exhaust gases propelled out of a solar thermal engine used in conjunction with such a mirror arrangement are likely to be ejected approximately along this axis. Indeed, it may be best to force them to be ejected along this axis, by some sort of exhaust guide, perhaps again made out of a very lightweight flexible material akin to the substrate underlying the mirrors. Thus with layouts akin to Figure 4, many of the incoming light rays might be fouled by the exhaust gases themselves or this exhaust guide. Layouts akin to Figure 3 are therefore likely to be preferred. The rays in this variant do not cross the positive *x*-axis. Such an arrangement also offers a slightly lower surface area as a proportion of effective collector aperture, and better aberration characteristics without altering the effective aperture area.

Changing the values of $q_1$, $q_2$ but not their signs (or whether the absolute value of $q_2$ is smaller or larger than unity) produces mirror layouts that have visual similarities to the one shown in Figure 3 but are somewhat different shapes. Possible disadvantages of using values of $q_1 = 2$ and $q_2 = -0.2$ are that the larger mirror is some way away from the image. For a solar-powered orbital launcher, which could be hundreds of metres in diameter, the further away the mirror is, the longer would need to be the wire or wires joining the engine to the mirror. This might therefore increase the masses of these wires. A more compact arrangement may be preferred. If the vehicle is to travel in the direction of its axis then the solar thermal rocket exhaust needs to escape through the hole in the centre of the larger mirror, which subtends quite a small angle in this arrangement. This angle would also be larger if abs($q_2$) were larger and $q_1$ were smaller. Of course, such parameter changes also alter other characteristics of the mirror pair, in some instances detrimentally, so some trade-off is likely to be required. For example, if Figure 3 is altered to use $q_1 = 0.7$ and $q_2 = -0.3$ then the mirror layout becomes as shown in Figure 17. The average aberration factor improves to 0.020, but the effective aperture area falls to 91 % and the mirror surface area as a multiple of the effective aperture area rises to 1.13. Reducing $q_1$ also makes the smaller mirror closer to the image plane, increasing the possibility that it might overheat.

The present invention provides for new applications of the novel high numerical imaging layouts described here including their use as solar sails, their use to provide power for a balanced ion drive, their use to provide a solar-powered orbital launch vehicle, their use for several different purposes at different times during the same flight, their use in a tethered balloon arrangement for generating electric power, and their use in a solar thermal propulsion context with the solar thermal propulsion engine incorporating the equivalent of "after-burn".

Figure 18 is a perspective view of an embodiment used to provide solar thermal propulsion. The two (lightweight) mirrors (1a) and (1b) are jointly arranged according to the iterative process provided in the present invention as described above (in this embodiment, as in Figures 19 and 20 their layout is as shown in Figure 17). Sunlight (1h) is concentrated via these two mirrors onto a small area (1 c) (not here drawn to scale, as in the vicinity of the earth this would be approximately 1/200$^{th}$ of the radius of the mirror (1a)). Here it heats up a propellant to a high temperature. The propellant is then expelled through one or more nozzles (1d). It may be helpful to have a guide (1e) to ensure that the expelled propellant does not damage the larger mirror (1a). Payload and propellant etc would be carried somewhere within the overall rocket superstructure (1f). For a solar orbital launch vehicle, to avoid excessive air resistance at launch, the mirrors could be stowed in a suitable container (1 g) within the vehicle superstructure, with the rocket initially being powered by a conventional rocket to build up some speed and to propel the vehicle beyond the atmosphere.

Figure 19 is a perspective view of an embodiment used as a solar sail. The two (lightweight) mirrors (2a) and

(2b) are arranged, as in Figure 18, according to the present invention. Sunlight (2d) is concentrated via these two mirrors onto a small area. Instead of placing a solar thermal propulsion engine there, the sunlight would be deflected (by roughly 90° to the direction of the incoming sunlight) by a suitable additional mirror arrangement (2c), of which the easiest to envisage is a parabolic mirror with a focal point positioned at the same place as the focal point of the two mirror arrangement (2a) and (2b).

Figure 20 is a perspective view of an embodiment used to facilitate solar power generation via a tethered balloon structure. The two (lightweight) mirrors (3a) and (3b) are arranged, as in Figure 18, according to the present invention. The mirrors are embedded within a balloon. In this embodiment the balloon is spherical with three chambers (3c), (3d) and (3e), with the middle one (3d) being bordered by the mirrors (3a) and (3b). The pressure in (3d) would be higher than in (3c) or (3e) which in turn would be higher than outside, so that the shape of the arrangement remains as shown in the figure. The gas within the balloon would be sufficiently lighter than air for the whole arrangement to be buoyant. Tethers (3f) would then be joined between the balloon and the ground (3g); by altering the length of the tethers the arrangement would be kept pointed so that sunlight (3h) is falling onto the mirror arrangement parallel to its axis of rotation.

Figure 21 and Figure 22 are perspective views from different angles of the mirror arrangement shown in cross-section in Figure 17 and as in the example applications illustrated in Figures 18, 19 and 20.

It will be appreciated that arrangements according to the present invention may also be adapted for use in applications and with additional or modified components corresponding to those described in PCT/GB01/01161.

## Claims

**1.** A method for designing a two-mirror high numerical aperture imaging device comprising the steps of:

(a) determining the Cartesian coordinates (*x, y, z*) of points on the surfaces of a first rotationally symmetric mirror and a second rotationally symmetric mirror with a common optical axis, positioned along the *x*-axis, by determining the positioning of each consecutive point of a cross-section through the *x*-axis of a first mirror and a second mirror, Iteratively for a cross-section In the plane $z$ = 0, where the $x$ and $y$ coordinates of each successive point on the two mirrors In the cross-section are $M_1(t) = (m_{1,x}(t),m_{1,y}(t),0)$ (for the first mirror) and $M_2(t) = (m_{2,x}(t),m_{2,y}(t),0)$ (for the second), to being an iteration counter, where the functions $M_0(t) = (m_{0,x}(t), m_{0,y}(t),0)=(f,0,0)$ and $M_3(t) = (m_{3,x}(t),m_{3,y}(t),0)=(0,0,0)$ are set to define the centres of the object and image planes respectively

(b) Calculating the angle $d_i(t)$, for $i$ = 0, ..., 2, that a ray from $M_i(t)$ to $M_{i+1}(t)$ makes to the *x*-axis, i.e.

$$d_i(t) = \arctan\left(\frac{m_{i+1,y}(t) - m_{i,y}(t)}{m_{i+1,x}(t) - m_{i,x}(t)}\right)$$

(c) Calculating the distance $p_i(t)$, for $i$ = 0, ..., 2 between $M_i(t)$ and $M_{i+1}(t)$, i.e.

$$p_i(t) = \sqrt{\left(m_{i+1,x}(t) - m_{i,x}(t)\right)^2 + \left(m_{i+1,y}(t) - m_{i,y}(t)\right)^2}$$

(d) Calculating the angle $a_i(t)$ that a tangent to the $i$th surface makes to the *x*-axis, taking $a_0(t)$ and $a_3(t)$ to be the angles that the object and image planes make to the *x*-axis, being 90° for all $t$ for the surfaces to be rotationally symmetric about the *x*-axis, i.e. for reflection, for $i$ = 1 and 2:

$$a_i(t) = \frac{d_i(t)}{2} + \frac{d_{i-1}(t)}{2}$$

(e) Choosing the values of $m_{i,x}(0)$ and $m_{i,y}(0)$, for $I$ = 1 and 2, so that the resulting mirror layout satisfies the sine criterion, and wherein for a far away source, say along the negative *x*-axis, say $f = -10^9$, wherein the sine criterion is then satisfied if:

$$m_{1,y}(0) = \pm \frac{m_{2,y}(0)}{\left(m_{2,x}(0)^2 + m_{2,y}(0)^2\right)^{1/2}}$$

(f) Iterating either from shallower angles to more oblique angles, or vice versa, switching between the two being achieved by using as seed values later Iterated results and reversing the sign of the iteration step size $h$, where $h$ can be positive or negative, such that If the iteration Is from highly oblique angles then set $m_{2,x}(0)$ equal to a small number close to zero, say $10^{-9}$, and choose $m_{1,x}(0) = q_1$ and $m_{2,y}(0) = q_2$, where $q_1$ and $q_2$ are arbitrary real numbers, positive or negative, but with the choice of signs of $q_1$, $q_2$ and $h$ constrained so as not to have simultaneously the sign of $q_1$ negative, the sign of $q_2$ positive and the sign of $h$ positive, then $m_{1,y}(0)$ will need to be $\pm 1$ for the Initial parameters to satisfy the sine criterion, and without loss of generality It Is possible to choose $m_{1,y}(0)$ to be -1

(g) Updating the values of $M_i(t)$ as follows, for $i$ = 1 and 2, for a small value of the iterative step size $h$,:

$$M_i(t+1) = \begin{pmatrix} m_{i,x}(t+1) \\ m_{i,y}(t+1) \end{pmatrix} = M_i(t) + w_i \begin{pmatrix} \cos(a_i(t)) \\ \sin(a_i(t)) \end{pmatrix} h$$

where $w_2 = \frac{p_1 r_0}{p_0 s_2}$ $w_1 = -ZB\frac{p_1 s_3}{p_2 r_1}$,

$r_0$ and $r_1$ are defined using $r_{i-1}(t) = \sin(a_{i-1}(t) - d_{i-1}(t))$ for $i$ = 1 and 2,

$s_2$ and $s_3$ are defined using $s_i(t) = \sin(a_i(t) - d_{i-1}(t))$ for $i$ = 2 and 3,

$Z$ is +1 or -1, the sign being chosen so that the sine criterion remains satisfied as $t$ changes,

$b$ is a scale parameter that may be set equal to unity, without loss of generality, and where $B = b/p_0(0) = 1/p_0(0)$

(h) Ending the iteration no later than when light rays cease to be able to pass freely through the mirror arrangement, once It has been rotated as In (I)

(i) Rotating the curves produced above around the $x$-axis to define the complete, three-dimensional mirror surfaces.

**2.** A method for designing a two-mirror high numerical aperture imaging device according to claim 1, wherein $q_1$, $q_2$ and the sign of $h$ are selected from the group consisting of: ($q_1 > 0$, $-1 < q_2 < 0$ and $h < 0$); ($q_1 > 0$, $0 < q_2 < 1$ and $h > 0$); ($q_1 > 0$, $0 < q_2 < 1$ and $h < 0$); ($q_1 > 0$, $-1 < q_2 < 0$ and $h > 0$); ($q_1 < 0$, $0 < q_2 < 1$ and $h < 0$); ($q_1 < 0$; $-1 < q_2 < 0$ and $h > 0$); ($q_1 < 0$, $-1 < q_2 < 0$ and $h < 0$); ($q_1 > 0$, $q_2 > 1$ and $h > 0$); ($q_1 > 0$, $q_2 > 1$ and $h < 0$); ($q_1 > 0$, $q_2 < -1$ and $h > 0$); ($q_1 > 0$, $q_2 < -1$ and $h < 0$); ($q_1 < 0$, $q_2 > 1$ and $h < 0$); ($q_1 < 0$, $q_2 < -1$ and $h > 0$) and ($q_1 < 0$, $q_2 < -1$ and $h < 0$).

**3.** A high numerical aperture aplanatic imaging device consisting of two mirrors, a first rotationally-symmetric mirror and a second rotationally-symmetrlc mirror arranged along a common optical axis, wherein the shapes and relative positioning of the first and second mirrors are defined by following the method of claim 1 for a choice of $q_1$, $q_2$ and sign of $h$, for $h$ sufficiently small, the choice not Involving having $q_1 < 0$, $q_2 > 0$, or $h > 0$ If the choice of axes Is such that $m_{1,y}(0)$ is negative.

**4.** A low mass imaging device (1) according to claim 3 comprising first and second axially symmetric curved mirrors (1a, 1b) adapted to concentrate sunlight, further comprising a solar thermal propulsion arrangement (1c) that creates direct thrust for powered flight by heating and expelling a propellant.

**5.** A low mass Imaging device (2) according to claim 3 comprising first and second axially symmetric curved mirrors (2a, 2b) adapted to create thrust in outer space by focusing incoming light photons into a small area, further comprising one or more mirrors (2c) that are used to deflect the focused light photons In a suitable direction away from the device, the thrust being generated by the deflection of the photons.

**6.** An imaging device according to claim 3 adapted to concentrate electromagnetic radiation to a high temperature for the purpose of generating electric power.

**7.** A low mass device according to claim 6 adapted to generate electric power and to provide thrust for powered flight.

**8.** A low mass device according to claim 7 in which the thrust is provided by a balanced ion drive In which both positively and negatively charged ions are simultaneously propelled away from the device in suitable proportions to avoid a space charge building up around the device.

**9.** A high numerical aperture imaging device according to claim 3 further comprising a partially transparent plane mirror positioned proximate to the image plane.

**10.** A device according to claims 3 or 9, further comprising a wave attenuation element and a wave polarisation-rotating element designed so that the spatial distribution of the amplitude and polarisation of a wavefront as it approaches the image plane is rendered more closely consistent with that required to generate dlpole-like solutions to the wave equation.

**11.** A device according to any of claims 3, 9 or 10, adapted to produce highly accurate lithographic images for use in semiconductor/microchip manufacture.

**12.** A device according to claim 3 adapted to concentrate or project light, or other waves, or gas molecules In a highly rarefied atmosphere, whose equations of motion mean that they follow the same straight-line trajectories as light rays when passing though the adapted device until they hit a surface where they are then deflected as they bounce off the surface by the same angle as a light ray would do were it to strike an equivalently positioned mirror.

**13.** A device according to claim 3 in which the first and second mirrors are not inherently structurally rigid, and are adapted to rotate about a common axis in operation in order to maintain their required shape.

**14.** A device according to claim 3 in which the first and second mirrors are not inherently rigid, and are adapted to be inflated In operation to attain their required shape.

**15.** A device according to claim 3 for interlinking of optical networking components, the device further comprising a solid state optical emitter or detector in the source/Image plane, "optical" here to be understood to include infra-red, microwave and other sorts of electromagnetic radiation as well as visible light.

**16.** A device according to any of claims 3 to 15 in which the shape of the first and second mirrors is further modified to compensate for higher order aberrations by adjusting $M_0(t)$ and $M_3(t)$ in step (a) of claim 1 so that the centres of images of edges of a suitably sized circular or far away spherical object are at each step of the iteration more nearly centred on the point at which rays from the centre of such a circular or far away spherical object would strike the image plane.

**17.** A system comprising a two-mirror device according to any of claims 3 to 16 in combination with one or more additional mirrors and/or refracting or diffracting surfaces, adapted to exhibit improved aberration characteristics.

## Patentansprüche

**1.** Verfahren zum Auslegen einer Doppelspiegel-Abbildungseinrichtung mit hoher numerischer Apertur, umfassend die folgenden Schritte:

(a) Bestimmen der kartesischen Koordinaten ($x, y, z$) von Punkten auf den Oberflächen eines ersten rotationssymmetrischen Spiegels und eines zweiten rotationssymmetrischen Spiegels mit einer gemeinsamen optischen Achse, entlang der $x$-Achse positioniert, durch iteratives Bestimmen der Positionierung jedes aufeinander folgenden Punktes eines Querschnitts durch die $x$-Achse eines ersten Spiegels und eines zweiten Spiegels, für einen Querschnitt in der Ebene $z = 0$, wobei die $x$- und $y$-Koordinaten jedes aufeinander folgenden Punktes auf den beiden Spiegeln in dem Querschnitt $M_1(t) = (m_{1,x}(t), m_{1,y}(t), 0)$ (für den ersten Spiegel) und $M_2(t)=(m_{2,x}(t), m_{2,y}(t), 0)$ (für den zweiten) sind, wobei $t$ ein Iterationszähler ist; wobei die Funktionen $M_0(t) = (m_{0,x}(t), m_{0,y}(t), 0)=(f,0,0)$ und $M_3(t) = (m_{3,x}(t), m_{3,y}(t),0)=(0,0,0)$ so eingestellt sind, dass sie die Mitte der Objekt- bzw. Bildebene definieren

(b) Berechnen des Winkels $d_i(t)$, für $i = 0, ..., 2$, den ein Strahl von $M_i(t)$ zu $M_{i+1}(t)$ zu der $x$-Achse bildet, d.h.

$$d_i(t) = \arctan\left(\frac{m_{i+1,y}(t) - m_{i,y}(t)}{m_{i+1,x}(t) - m_{i,x}(t)}\right)$$

(c) Berechnen des Abstands $p_i(t)$, für $i$ = 0, ..., 2 zwischen $M_i(t)$ und $M_{i+1}(t)$, d.h.

$$p_i(t) = \sqrt{\left(m_{i+1,x}(t) - m_{i,x}(t)\right)^2 + \left(m_{i+1,y}(t) - m_{i,y}(t)\right)^2}$$

(d) Berechnen des Winkels $a_i(t)$, den eine Tangente zu der $i$-ten Oberfläche zu der $x$-Achse bildet, wobei $a_0(t)$ und $a_3(t)$ als die Winkel genommen werden, die die Objekt- und Bildebene zu der $x$-Achse bilden, nämlich 90° für alle $t$, damit die Oberflächen rotationssymmetrisch zu der $x$-Achse sind, d.h. für eine Reflexion, für $i$ = 1 und 2:

$$a_i(t) = \frac{d_i(t)}{2} + \frac{d_{i-1}(t)}{2}$$

(e) Wählen der Werte für $m_{i,x}(0)$ und $m_{i,y}(0)$, für $i$ = 1 und 2, so dass das resultierende Spiegellayout das Sinus-Kriterium erfüllt und so dass für eine weit entfernte Quelle, etwa entlang der negativen $x$-Achse, etwa $f$= $-10^9$, das Sinus-Kriterium dann erfüllt ist, wenn:

$$m_{1,y}(0) = \pm \frac{m_{2,y}(0)}{\left(m_{2,x}(0)^2 + m_{2,y}(0)^2\right)^{1/2}}$$

(f) Iterieren entweder von den flacheren Winkeln zu schrägeren Winkeln oder umgekehrt, wobei das Umwechseln zwischen den beiden **dadurch** erreicht wird, dass als Keimwerte später iterierte Werte verwendet werden und das Vorzeichen der Iterationsschrittgröße $h$ umgekehrt wird, wobei $h$ positiv oder negativ sein kann, so dass, wenn die Iteration von stark schrägen Winkeln aus erfolgt, dann $m_{2,x}(0)$ gleich einer kleinen Zahl nahe Null gesetzt, etwa $10^{-9}$, und $m_{1,x}(0) = q_1$ und $m_{2,y}(0) = q_2$ gewählt wird, wobei $q_1$ und $q_2$ willkürliche reelle Zahlen sind, positiv oder negativ, wobei aber die Wahl der Vorzeichen von $q_1$, $q_2$ und $h$ dahingehend eingeschränkt ist, dass <u>nicht</u> gleichzeitig das Vorzeichen von $q_1$ negativ, das Vorzeichen von $q_2$ positiv und das Vorzeichen von $h$ positiv ist, dann $m_{1,y}(0)$ $\pm 1$ sein muss, damit die Anfangsparameter das Sinus-Kriterium erfüllen, und ohne Beschränkung der Allgemeinheit ist es möglich, $m_{1,y}(0)$ als -1 zu wählen

(g) Aktualisieren der Werte von $M_i(t)$ wie folgt, für $i$ = 1 und 2, für einen kleinen Wert der Iterationsschrittgröße $h$:

$$M_i(t+1) = \begin{pmatrix} m_{i,x}(t+1) \\ m_{i,y}(t+1) \end{pmatrix} = M_i(t) + w_i \begin{pmatrix} \cos(a_i(t)) \\ \sin(a_i(t)) \end{pmatrix} h$$

wobei $w_2 = \frac{p_1 r_0}{p_0 s_2}$ $w_1 = -ZB\frac{p_1 s_3}{p_2 r_1}$,

$r_0$ und $r_1$ mit $r_{i-1}(t) = \sin(a_{i-1}(t)-d_{i-1}(t))$ für $i$ = 1 und 2 definiert werden,

$s_2$ und $s_3$ mit $s_i(t) = \sin(a_i(t)-d_{i-1}(t))$ für $i$ = 2 und 3 definiert werden,

$Z$ +1 oder -1 ist, wobei das Vorzeichen so gewählt wird, dass das Sinus-Kriterium bei sich änderndem $t$ weiterhin erfüllt ist,

$b$ ein Skalenparameter ist, der ohne Beschränkung der Allgemeinheit gleich Eins gesetzt werden kann, und wobei $B = b/p_0(0) = 1/p_0(0)$

(h) Beenden der Iteration nicht später, als wenn Lichtstrahlen nicht mehr frei durch die Spiegelanordnung passieren können, nachdem sie wie in (i) gedreht worden ist

(i) Drehen der oben erzeugten Kurven um die $x$-Achse, um die vollständigen dreidimensionalen Spiegeloberflächen zu definieren.

2. Verfahren zum Auslegen einer Doppelspiegel-Abbildungseinrichtung mit hoher numerischer Apertur nach Anspruch 1, wobei $q_1$, $q_2$ und die Vorzeichen von $h$ ausgewählt sind aus der Gruppe bestehend aus: ($q_1 > 0$, $-1 < q_2 < 0$ und $h < 0$); ($q_1 > 0$, $0 < q_2 < 1$ und $h > 0$); ($q_1 > 0$, $0 < q_2 < 1$ und $h < 0$); ($q_1 > 0$, $-1 < q_2 < 0$ und $h > 0$); ($q_1 < 0$, $0 < q_2 < 1$ und $h < 0$); ($q_1 < 0$, $-1 < q_2 < 0$ und $h > 0$); ($q_1 < 0$, $-1 < q_2 < 0$ und $h < 0$); ($q_1 > 0$, $q_2 > 1$ und $h > 0$); ($q_1 > 0$, $q_2 > 1$ und $h < 0$); ($q_1 > 0$, $q_2 <-1$ und $h > 0$); ($q_1 > 0$, $q_2 <-1$ und $h < 0$); ($q_1 < 0$, $q_2 > 1$ und $h < 0$); ($q_1 < 0$, $q_2 < -1$ und $h > 0$) und ($q_1 < 0$, $q_2 < -1$ und $h < 0$).

3. Aplanatische Abbildungseinrichtung mit hoher numerischer Apertur, die aus zwei Spiegeln besteht, einem ersten rotationssymmetrischen Spiegel und einem zweiten rotationssymmetrischen Spiegel, die entlang einer gemeinsamen optischen Achse angeordnet sind, wobei die Formen und die relative Positionierung des ersten und zweiten Spiegels durch Befolgen des Verfahrens nach Anspruch 1 definiert werden für eine Wahl von $q_1$, $q_2$ und des Vorzeichens von $h$, für ein ausreichend kleines $h$, wobei die Wahl nicht beinhaltet, dass $q_1 < 0$, $q_2 >0$, oder $h > 0$, wenn die Wahl der Achsen derart ist, dass $m_{1,y}(0)$ negativ ist.

4. Massenarme Abbildungseinrichtung (1) nach Anspruch 3, umfassend einen ersten und zweiten achsensymmetrischen gekrümmten Spiegel (1a, 1b), die dafür ausgelegt sind, Sonnenlicht zu konzentrieren, weiterhin umfassend eine solarthermische Antriebsanordnung (1c), die einen direkten Schub erzeugt für Motorflug durch Erhitzen und Ausstoßen eines Treibstoffs.

5. Massenarme Abbildungseinrichtung (2) nach Anspruch 3, umfassend einen ersten und zweiten achsensymmetrischen gekrümmten Spiegel (2a, 2b), die dafür ausgelegt sind, einen Schub im Weltall zu erzeugen durch Fokussieren von ankommenden Lichtphotonen in einen kleinen Bereich, weiterhin umfassend einen oder mehrere Spiegel (2c), mit denen fokussierte Lichtphotonen in eine geeignete Richtung weg von der Einrichtung abgelenkt werden, wobei der Schub durch die Ablenkung der Photonen erzeugt wird.

6. Abbildungseinrichtung nach Anspruch 3, die dafür ausgelegt ist, zum Zweck des Erzeugens von elektrischer Leistung elektromagnetische Strahlung auf eine hohe Temperatur zu konzentrieren.

7. Massenarme Einrichtung nach Anspruch 6, die dafür ausgelegt ist, elektrische Leistung zu erzeugen und Schub für Motorflug zu liefern.

8. Massenarme Einrichtung nach Anspruch 7, bei der der Schub durch einen ausgeglichenen Ionenantrieb geliefert wird, bei dem positiv und negativ geladene Ionen in geeigneten Anteilen gleichzeitig von der Einrichtung weg angetrieben werden, um den Aufbau einer Raumladung um die Einrichtung herum zu vermeiden.

9. Abbildungseinrichtung mit hoher numerischer Apertur nach Anspruch 3, weiterhin umfassend einen nahe der Bildebene positionierten teiltransparenten ebenen Spiegel.

10. Einrichtung nach den Ansprüchen 3 oder 9, weiterhin umfassend ein Wellendämpfungselement und ein die Wellenpolarisation drehendes Element, so ausgelegt, dass die räumliche Verteilung der Amplitude und Polarisation einer Wellenfront bei Annäherung an die Bildebene A in bessere Übereinstimmung gebracht wird mit der, die erforderlich ist, um dipolartige Lösungen für die Wellengleichung zu erzeugen.

11. Einrichtung nach einem der Ansprüche 3, 9 oder 10, die dafür ausgelegt ist, hochpräzise lithografische Bilder zur Verwendung bei der Herstellung von Halbleitern/Mikrochips zu erzeugen.

12. Einrichtung nach Anspruch 3, die dafür ausgelegt ist, Licht oder andere Wellen oder Gasmoleküle in einer stark verdünnten Atmosphäre zu konzentrieren oder zu projizieren, deren Bewegungsgleichungen bedeuten, dass sie den gleichen geradlinigen Flugbahnen folgen wie Lichtstrahlen, wenn sie die ausgelegte Einrichtung durchqueren, bis sie auf eine Oberfläche treffen, wo sie dann beim Zurückprallen von der Oberfläche mit dem gleichen Winkel abgelenkt werden, wie ein Lichtstrahl abgelenkt würde, wenn er einen gleichwertig positionierten Spiegel treffen würde.

13. Einrichtung nach Anspruch 3, bei der der erste und zweite Spiegel nicht inhärent strukturell starr sind und dafür ausgelegt sind, sich bei Betrieb um eine gemeinsame Achse zu drehen, um ihre erforderliche Form beizubehalten.

**14.** Einrichtung nach Anspruch 3, bei der der erste und zweite Spiegel nicht inhärent starr sind und dafür ausgelegt sind, bei Betrieb aufgeblasen zu werden, um ihre erforderliche Form zu erzeugen.

**15.** Einrichtung nach Anspruch 3 zum Vernetzen von optischen Netzwerkkomponenten, wobei die Einrichtung weiterhin einen optischen Festkörperemitter oder -detektor in der Quellen-/Bildebene umfasst, wobei "optisch" hier so zu verstehen ist, dass es Infrarot-, Mikrowellen- und andere Arten von elektromagnetischer Strahlung sowie sichtbares Licht beinhaltet.

**16.** Einrichtung nach einem der Ansprüche 3 bis 15, bei der die Form des ersten und zweiten Spiegels weiter modifiziert ist, um Aberrationen höherer Ordnung zu kompensieren durch Justieren von $M_0(t)$ und $M_3(t)$ in Schritt (a) von Anspruch 1, so dass die Mitten der Bilder von Kanten eines geeignet großen kreisförmigen oder weit entfernten sphärischen Objekts bei jedem Schritt der Iteration besser auf den Punkt konzentriert sind, bei dem Strahlen von der Mitte eines solchen kreisförmigen oder weit entfernten sphärischen Objekts die Bildebene treffen würden.

**17.** System umfassend eine Doppelspiegeleinrichtung nach einem der Ansprüche 3 bis 16 in Kombination mit einer oder mehreren zusätzlichen Spiegeln und/oder brechenden oder beugenden Oberflächen, die dafür ausgelegt sind, verbesserte Aberrationscharakteristiken aufzuweisen.

## Revendications

**1.** Procédé pour concevoir un dispositif d'imagerie à grande ouverture numérique constitué de deux miroirs consistant à :

(a) Déterminer les coordonnées cartésiennes $(x, y, z)$ de points sur les surfaces d'un premier miroir à symétrie de rotation et d'un second miroir à symétrie de rotation ayant un axe optique commun, positionné le long de l'axe $x$, en déterminant le positionnement de chaque point consécutif d'une coupe transversale au travers de l'axe $x$ d'un premier miroir et d'un second miroir, itérativement pour une section transversale dans le plan $z = 0$, les coordonnées $x$ et $y$ de chaque point successif sur les deux miroirs de la section transversale étant $M_1(t) = (m_{1,x}(t), m_{1,y}(t), 0)$ (pour le premier miroir) et $M_2(t) = (m_{2,x}(t), m_{2,y}(t), 0)$ (pour le second), $t$ étant un compteur d'itération ; les fonctions $M_0(t) = (m_{0,x}(t), m_0,y(t), 0 = (f, 0, 0)$ et $M_3(t) = (m_{3,x}(t), m_{3,y}(t), 0) = (0,0,0)$ étant établies pour définir les centres de l'objet et des plans d'image respectivement,

(b) Calculer l'angle $d_i(t)$, pour $i = 0, \ldots, 2$, qu'un rayon venant de $M_i(t)$ à $M_{i+1}(t)$ fait avec l'axe $x$, c'est-à-dire

$$d_i(t) = \arctan\left(\frac{m_{i+1,y}(t) - m_{i,y}(t)}{m_{i+1,x}(t) - m_{i,x}(t)}\right)$$

(c) Calculer la distance $p_i(t)$, pour $i = 0, \ldots, 2$ entre $M_i(t)$ et $M_{i+1}(t)$, c'est-à-dire

$$p_i(t) = \sqrt{(m_{i+1,x}(t) - m_{i,x}(t))^2 + (m_{i+1,y}(t) - m_{i,y}(t))^2}$$

(d) Calculer l'angle $a_i(t)$ qu'une tangente à l'$i$-ième surface fait avec l'axe $x$, en prenant $a_0(t)$ et $a_3(t)$ comme les angles que les plans d'objet et d'image font avec l'axe $x$, ceux-ci étant de 90° pour tous les $t$ afin que les surfaces présentent une symétrie de rotation autour de l'axe $x$, c'est-à-dire pour la réflexion, pour $i = 1$ et 2:

$$a_i(t) = \frac{d_i(t)}{2} + \frac{d_{i-1}(t)}{2}$$

(e) Choisir les valeurs de $m_{i,x}(0)$ et $m_{i,y}(0)$, pour $i = 1$ et 2, de manière que l'agencement de miroirs en découlant réalise la condition des sinus, et dans lequel, pour une source éloignée, le long de l'axe x négatif par exemple, $f = -10^9$ par exemple, la condition des sinus est alors réalisée si :

$$m_{1,y}(0) = \pm \frac{m_{2,y}(0)}{\left(m_{2,x}(0)^2 + m_{2,y}(0)^2\right)^{1/2}}$$

(f) Itérer soit d'angles plus fermés vers des angles plus obtus soit inversement, le basculement entre les deux étant réalisé en utilisant comme valeurs initiales des résultats itérés ultérieurement en inversant le signe de l'incrément d'itération *h, h* pouvant être positif ou négatif, de manière que, si l'itération se fait à partir d'angles très obtus, il faudra alors paramétrer $m_{2,x}(0)$ pour qu'il soit égal à un petit nombre proche de zéro, $10^{-9}$ par exemple, et choisir $m_{1,x}(0) = q_1$ et $m_{2,y}(0) = q_2$, où $q_1$ et $q_2$ sont des nombres réels arbitraires, positifs ou négatifs, en contraignant toutefois le choix de signes pour $q_1$, $q_2$ et *h* de manière à <u>ne pas</u> avoir simultanément $q_1$ avec un signe négatif, $q_2$ avec un signe positif et *h* avec un signe positif, à la suite de quoi $m_{1,y}(0)$ devra être $\pm 1$ pour que les paramètres initiaux satisfassent la condition des sinus, et que, sans perte de généralité, il soit possible de choisir $m_{1,y}(0)$ pour qu'il soit -1

(g) Mettre à jour les valeurs de $M_i(t)$ comme suit, pour $i$ = 1 et 2, pour une petite valeur de l'incrément d'itération *h*, :

$$M_i(t+1) = \begin{pmatrix} m_{i,x}(t+1) \\ m_{i,y}(t+1) \end{pmatrix} = M_i(t) + w_i \begin{pmatrix} \cos(a_i(t)) \\ \sin(a_i(t)) \end{pmatrix} h$$

où: $w_2 = \frac{p_1 r_0}{p_0 s_2}$ $w_1 = -ZB\frac{p_1 s_3}{p_2 r_1}$,

$r_0$ et $r_1$ sont définis au moyen de $r_{i-1}(t) = \sin(a_{i-1}(t) - d_{i-1}(t))$ pour $i$ = 1 et 2,

$s_2$ et $s_3$ sont définis au moyen de $s_i(t) = \sin(a_i(t) - d_{i-1}(t))$ pour $i$ = 2 et 3,

*Z* est +1 ou -1, le signe étant choisi pour que la condition des sinus reste réalisée lorsque *t* change,

*b* est un paramètre d'échelle qui peut être défini comme égal à l'unité, sans perte de généralité,

et où $B = b/p_0(0) = 1/p_0(0)$

(h) Terminer l'itération, sans dépasser le moment où les rayons lumineux cessent de pouvoir traverser librement l'agencement de miroirs une fois qu'il a été pivoté comme en (i)

(i) Faire tourner les courbes produites ci-dessus autour de l'axe *x* pour définir les surfaces de miroir tridimensionnelles complètes.

**2.** Procédé pour concevoir un dispositif d'imagerie à grande ouverture numérique constitué de deux miroirs suivant la revendication 1, dans lequel $q_1$, $q_2$ et le signe de *h* sont sélectionnés parmi le groupe comportant : ($q_1 > 0$, $-1 < q_2 < 0$ et $h < 0$) ; ($q_1 > 0$, $0 < q_2 < 1$ et $h > 0$); ($q_1 > 0$, $0 < q_2 < 1$ et $h < 0$); ($q_1 > 0$, $-1 < q_2 < 0$ et $h > 0$); ($q_1 < 0$, $0 < q_2 < 1$ et $h < 0$); ($q_1 < 0$, $-1 < q_2 < 0$ et $h > 0$); ($q_1 < 0$, $-1 < q_2 < 0$ et $h < 0$); ($q_1 > 0$, $q_2 > 1$ et $h > 0$); ($q_1 > 0$, $q_2 > 1$ et $h < 0$); ($q_1 > 0$, $q_2 < -1$ et $h > 0$); ($q_1 > 0$, $q_2 < -1$ et $h < 0$); ($q_1 < 0$, $q_2 > 1$ et $h < 0$); ($q_1 < 0$, $q_2 < -1$ et $h > 0$) et ($q_1 < 0$, $q_2 < -1$ et $h < 0$).

**3.** Dispositif d'imagerie aplanétique à grande ouverture numérique constitué de deux miroirs, un premier miroir à symétrie de rotation et un second miroir à symétrie de rotation étant agencés le long d'un axe optique commun, les formes et le positionnement relatif du premier et du second miroirs étant définis suivant le procédé de la revendication 1 pour un choix de $q_1$, $q_2$ et un signe de *h*, pour des valeurs suffisamment petites de *h*, le choix ne mettant pas en jeu d'avoir $q_1 < 0$, $q_2 > 0$, ou $h > 0$ si le choix des axes fait que $m_{1,y}(0)$ est négatif.

**4.** Dispositif d'imagerie à faible masse (1) suivant la revendication 3 comprenant un premier et un second miroirs incurvés à symétrie axiale (1a, 1b) conçus pour concentrer la lumière solaire, comprenant en outre un agencement de propulsion thermique solaire (1c) qui génère une poussée directe pour vol propulsé par réchauffement et éjection d'un agent propulseur.

**5.** Dispositif à faible masse (2) suivant la revendication 3 comprenant un premier et un second miroirs incurvés à symétrie axiale (2a, 2b) conçu pour générer une poussée dans l'espace en focalisant des photons lumineux entrants

dans une petite zone, comprenant en outre un ou plusieurs miroir(s) (2c) utilisé(s) pour dévier les photons de lumière focalisés dans une direction adéquate éloignée du dispositif, la poussée étant générée par la déviation des photons.

**6.** Dispositif d'imagerie suivant la revendication 3 conçu pour concentrer le rayonnement électromagnétique à une température élevée dans le but de générer de l'énergie électrique.

**7.** Dispositif à faible masse suivant la revendication 6 conçu pour générer de l'énergie électrique et fournir une poussée pour vol propulsé.

**8.** Dispositif à faible masse suivant la revendication 7 dans lequel la poussée est fournie par une propulsion ionique équilibrée dans lequel les ions à charge tant positive que négative sont simultanément propulsés loin du dispositif en proportions adéquates afin d'éviter une accumulation de charge d'espace autour du dispositif.

**9.** Dispositif d'imagerie à grande ouverture numérique suivant la revendication 3 comprenant en outre un miroir plan partiellement transparent positionné à proximité du plan d'image.

**10.** Procédé suivant la revendication 3 ou 9, comprenant en outre un élément d'atténuation d'ondes et un élément de polarisation-rotation d'ondes conçu pour que la distribution spatiale de l'amplitude et de la polarisation d'un front d'ondes, lorsqu'il approche du plan d'image, soit rendue plus cohérente avec celle qui est nécessaire pour générer des solutions de type dipôle à l'équation d'onde.

**11.** Dispositif suivant l'une quelconque des revendications 3, 9 ou 10 conçu pour produire des images lithographiques de haute précision employées dans la production de semiconducteurs/puces.

**12.** Dispositif suivant la revendication 3 conçu pour concentrer ou projeter de la lumière, d'autres ondes, ou des molécules de gaz dans une atmosphère fortement raréfiée, dont les équations de mouvement indiquent qu'elles suivent les mêmes trajectoires en ligne droite que les rayons lumineux lors de la traversée du dispositif conçu jusqu'à ce qu'elles rencontrent une surface où elles sont alors déviées en étant réfléchies de la surface avec le même angle qu'aurait un rayon lumineux rencontrant un miroir positionné d'une manière équivalente.

**13.** Dispositif suivant la revendication 3 dans lequel les premier et second miroirs ne sont pas intrinsèquement rigides par leur structure et sont conçus pour tourner sur un axe commun lors du fonctionnement afin de conserver leur forme requise.

**14.** Dispositif suivant la revendication 3 dans lequel le premier et le second miroirs ne sont pas intrinsèquement rigides et sont conçus pour être gonflés lors du fonctionnement afin d'atteindre leur forme requise.

**15.** Dispositif suivant la revendication 3 pour interconnecter des composants de réseau optique, le dispositif comprenant en outre un émetteur ou détecteur optique à semiconducteur dans le plan source/image, « optique » devant être interprété ici comme englobant les rayonnements de types infrarouges, micro-ondes et autres types électromagnétiques ainsi que la lumière visible.

**16.** Dispositif suivant l'une quelconque des revendications 3 à 15 dans lequel la forme du premier et du second miroirs est modifiée en outre pour compenser des aberrations d'ordre supérieur en ajustant $M_0(t)$ et $M_3(t)$ à l'étape (a) de la revendication 1 de manière que les centres d'images des bords d'un objet circulaire d'une taille adéquate ou d'un objet sphérique éloigné soient plus étroitement centrés sur le point à chaque étape de l'itération à laquelle les rayons venant du centre d'un tel objet circulaire ou objet sphérique éloigné rencontreraient le plan d'image.

**17.** Système comprenant un dispositif à deux miroirs suivant l'une quelconque des revendications 3 à 16 en combinaison avec un ou plusieurs miroir(s) supplémentaire(s) et/ou une ou plusieurs surface(s) réfringent(e)(s) ou diffractant(e)(s), conçu pour présenter des caractéristiques d'aberration améliorées.

Figure 1 [Prior Art Embodiment according to PCT/GB01/01161]
(*x* and *y* axes are normalized units of length)

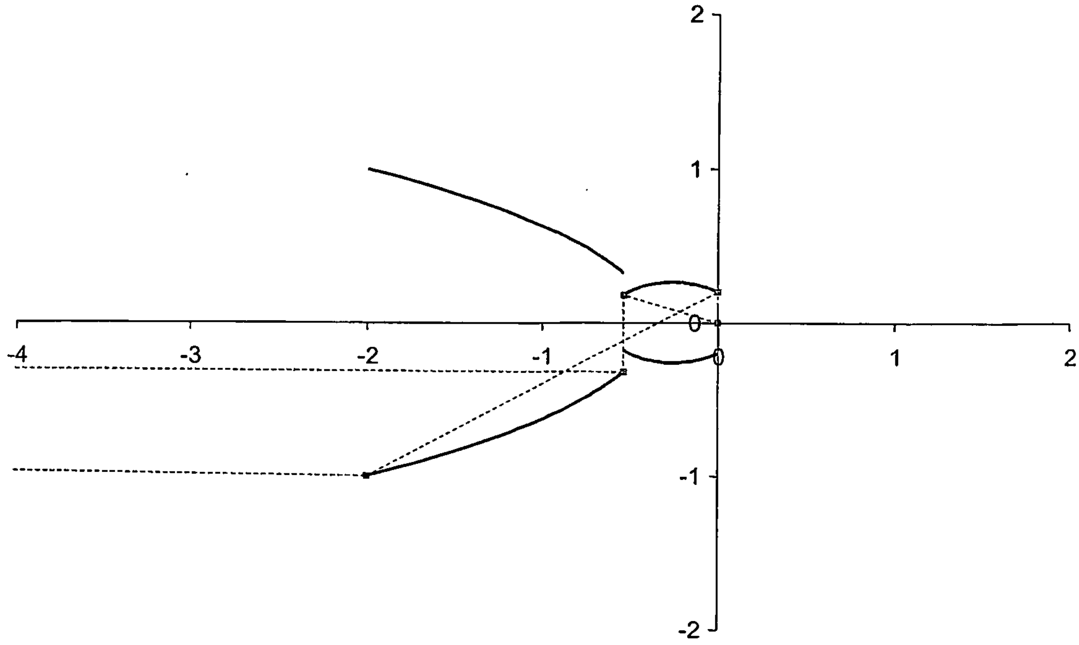


Figure 2 [Prior Art Embodiment according to PCT/GB01/01161]

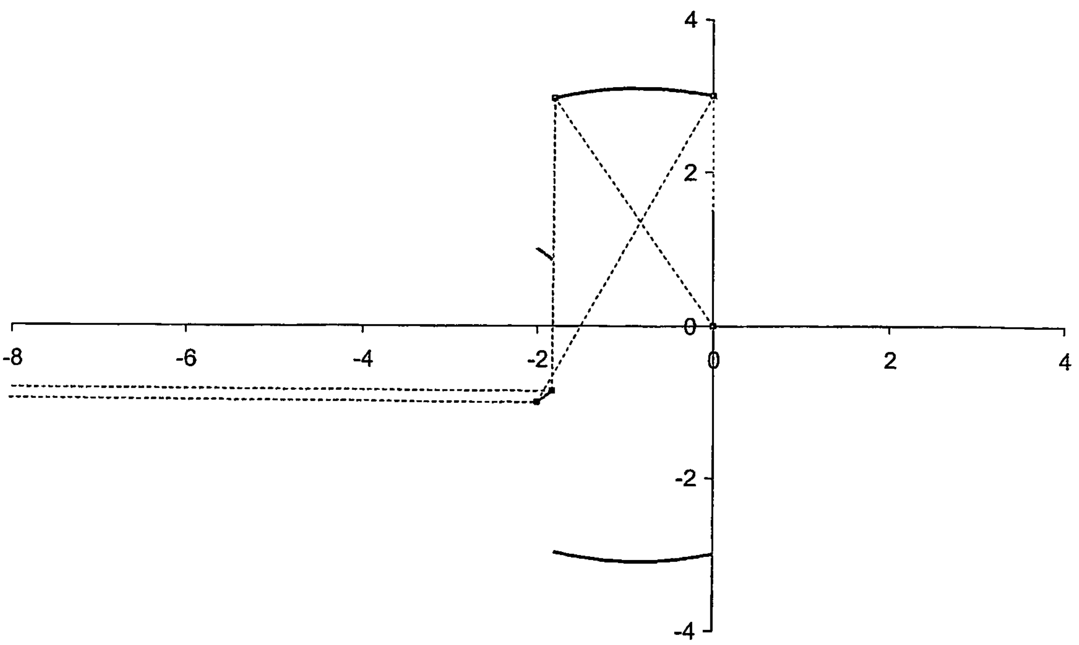

Figure 3

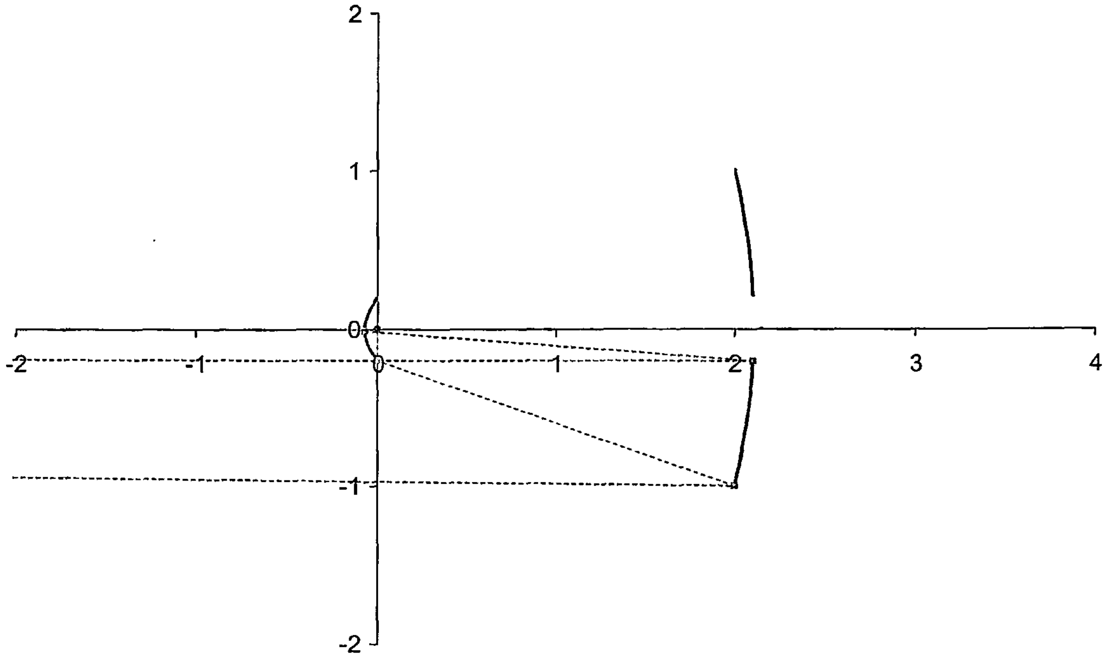


Figure 4

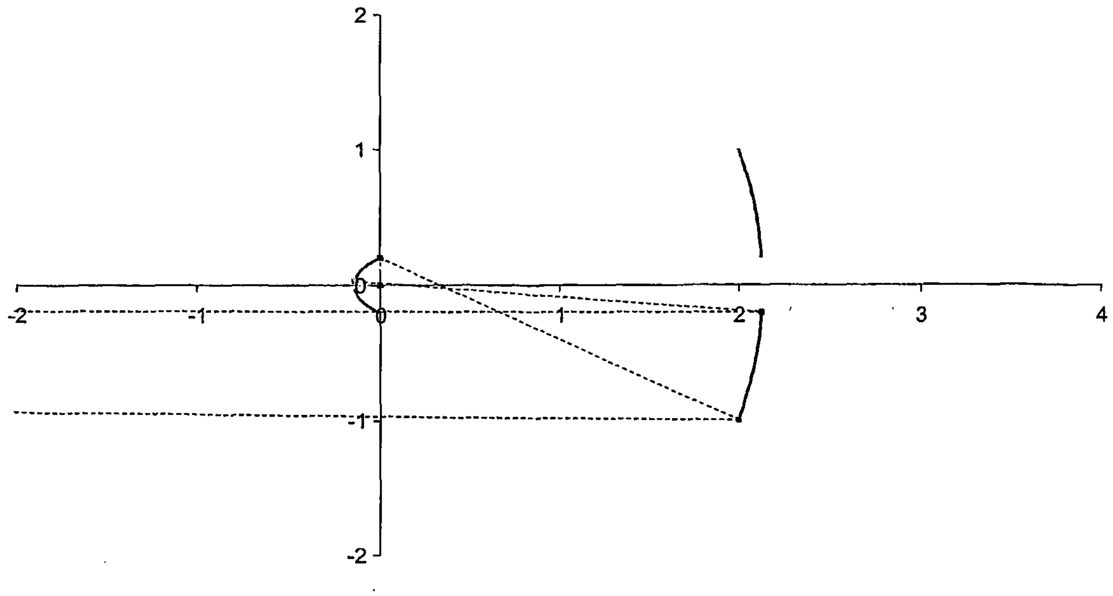

Figure 5

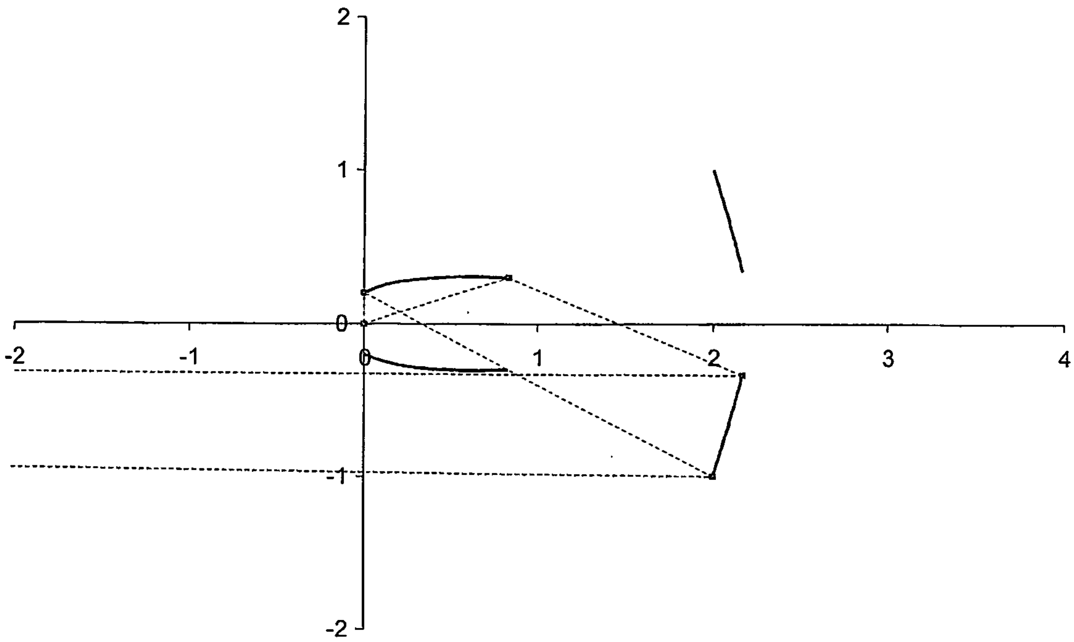


Figure 6

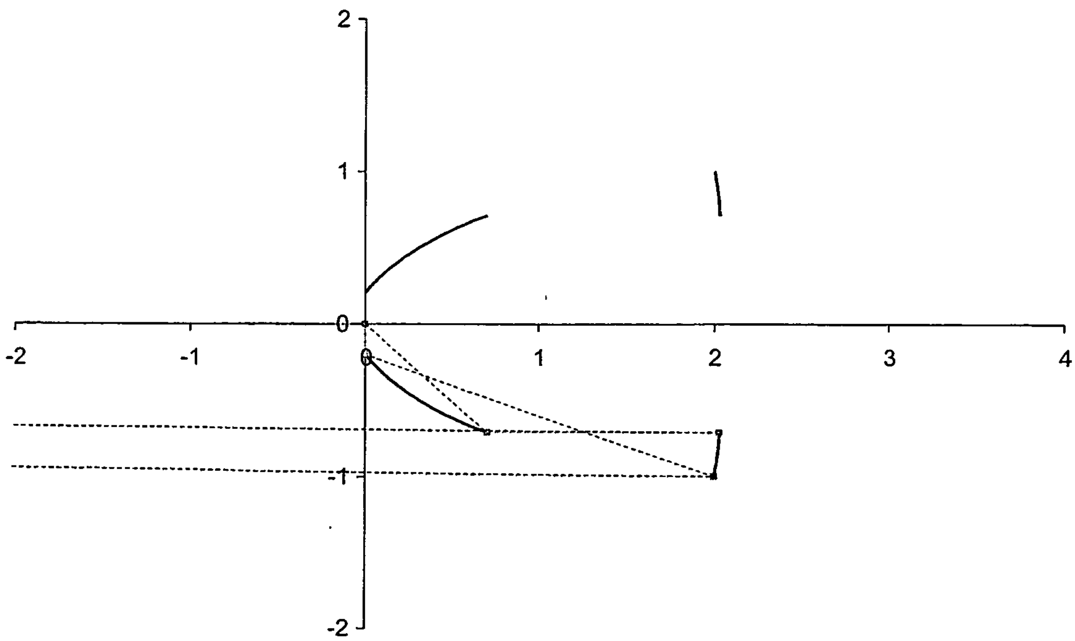

Figure 7

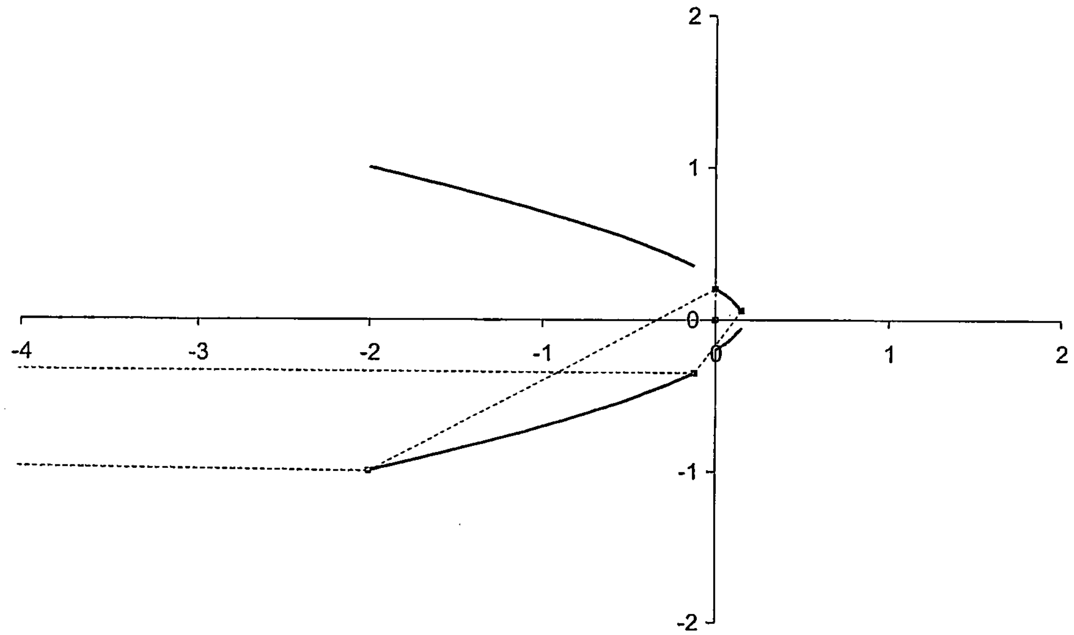


Figure 8

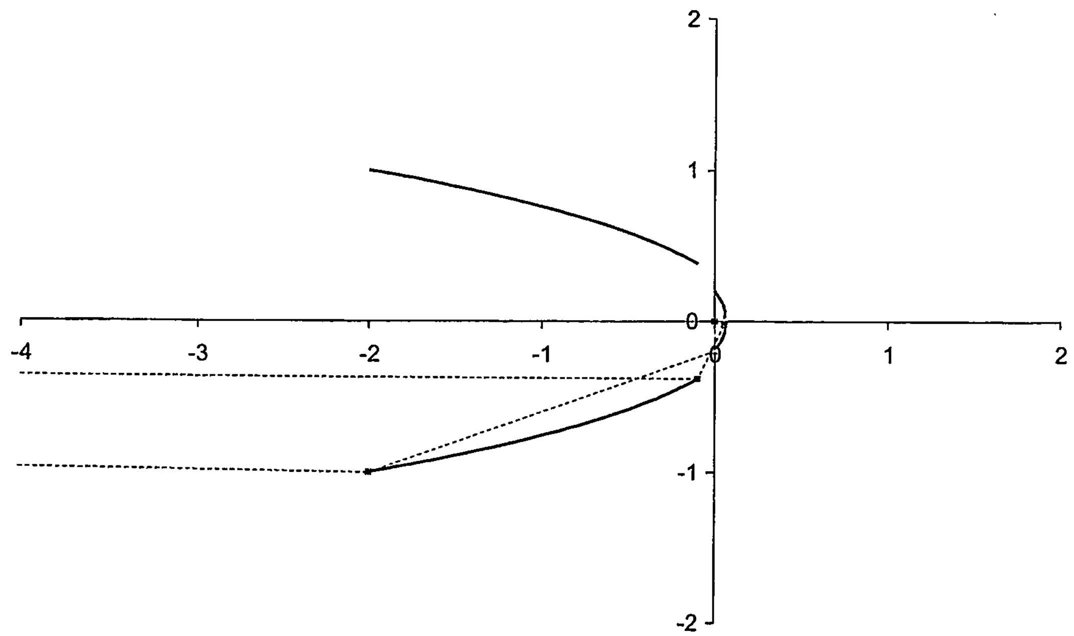

Figure 9

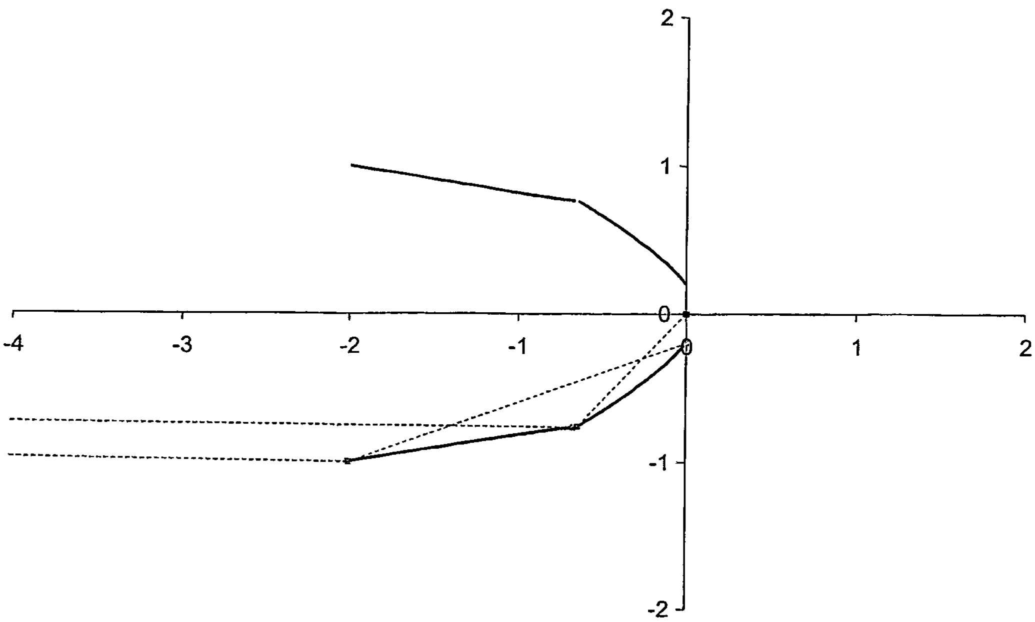


Figure 10

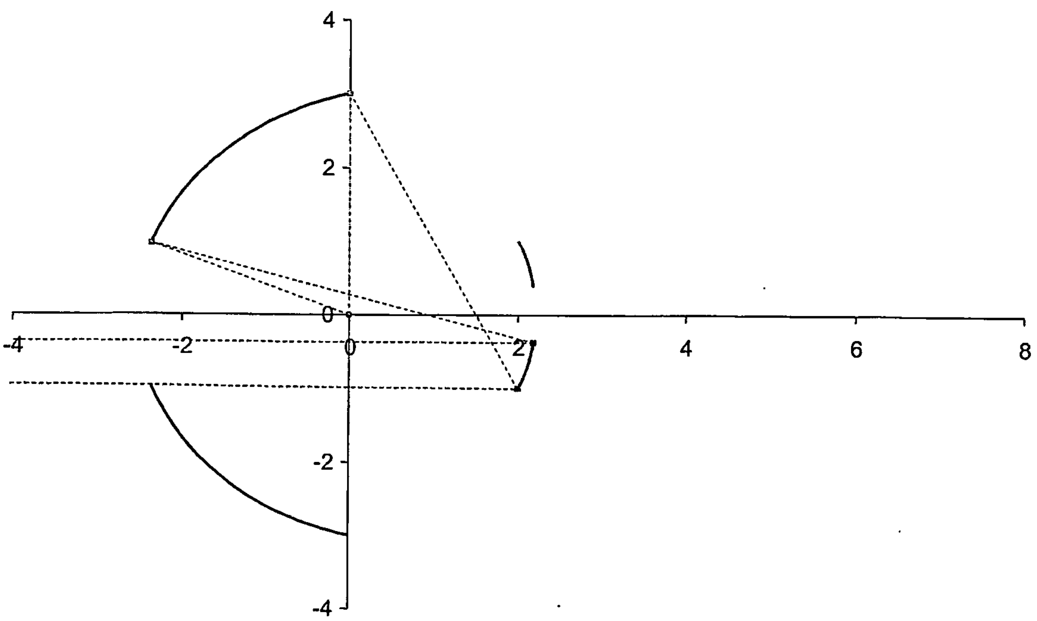

Figure 11

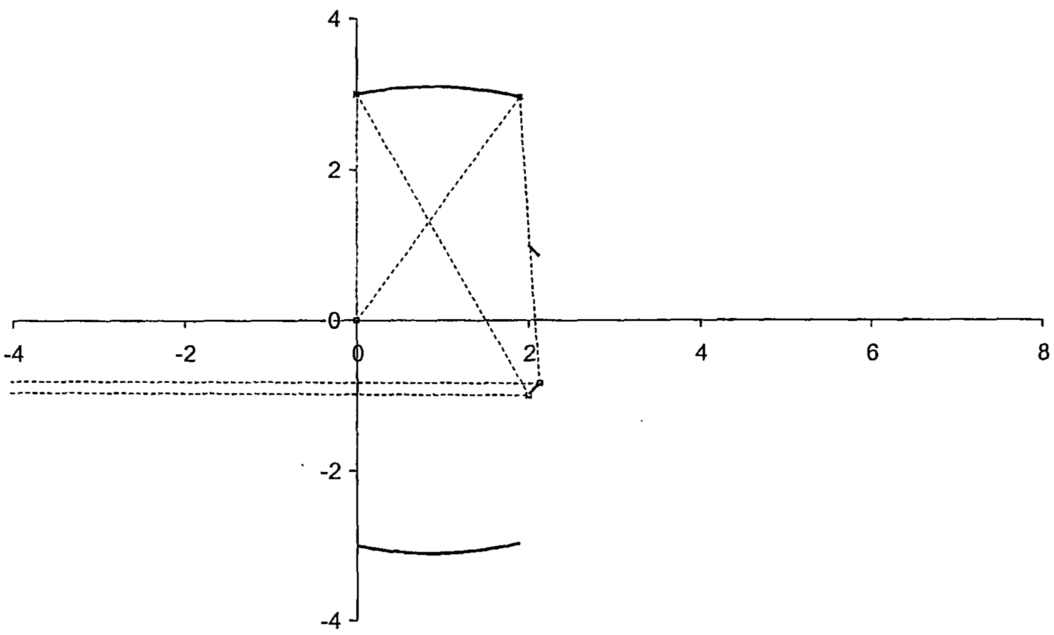


Figure 12

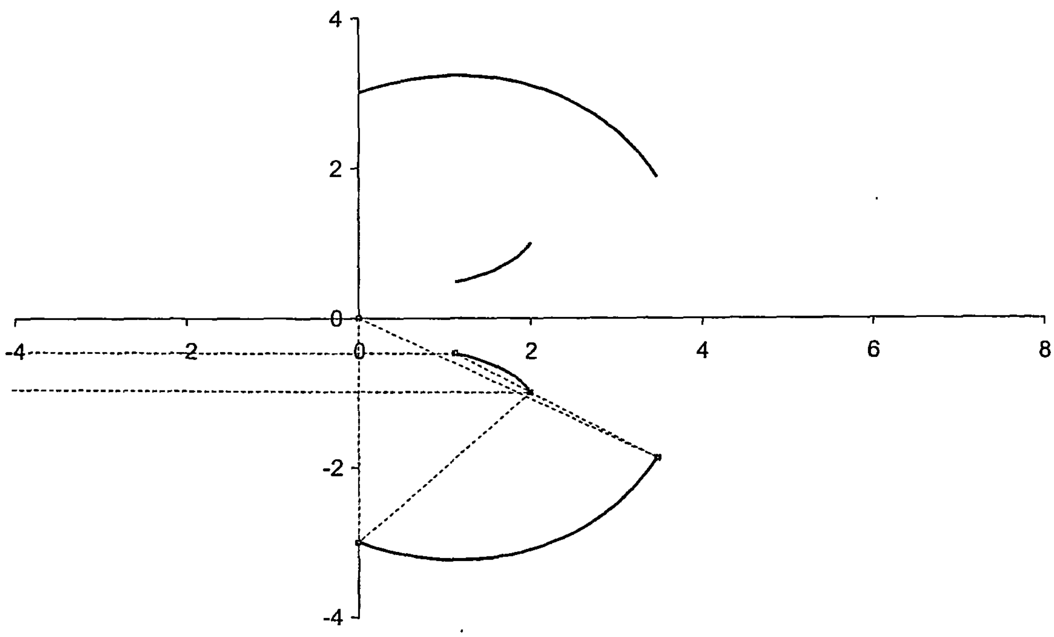

Figure 13

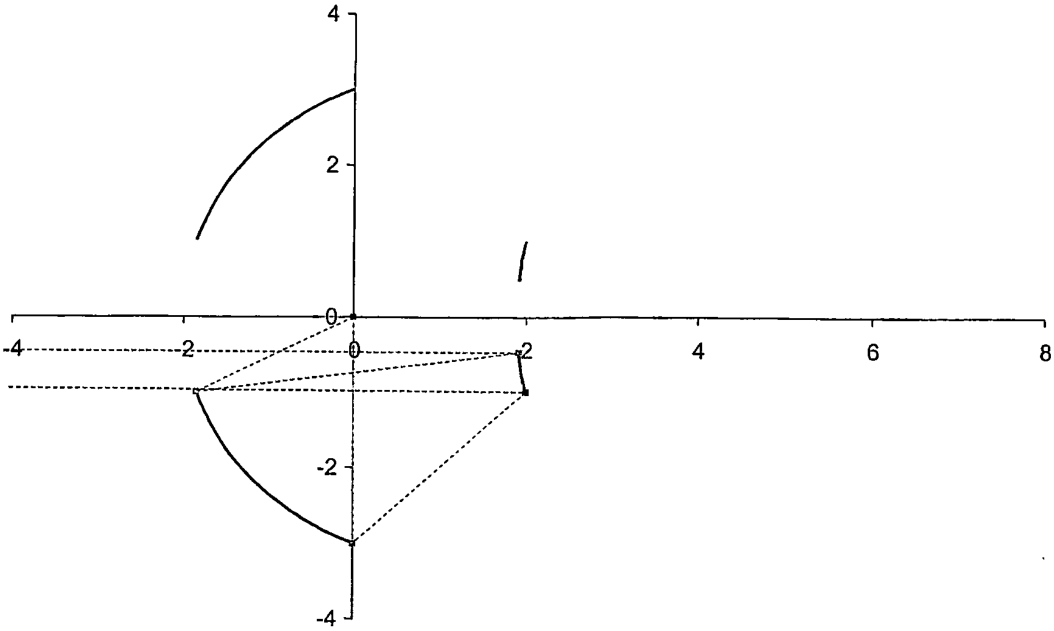


Figure 14

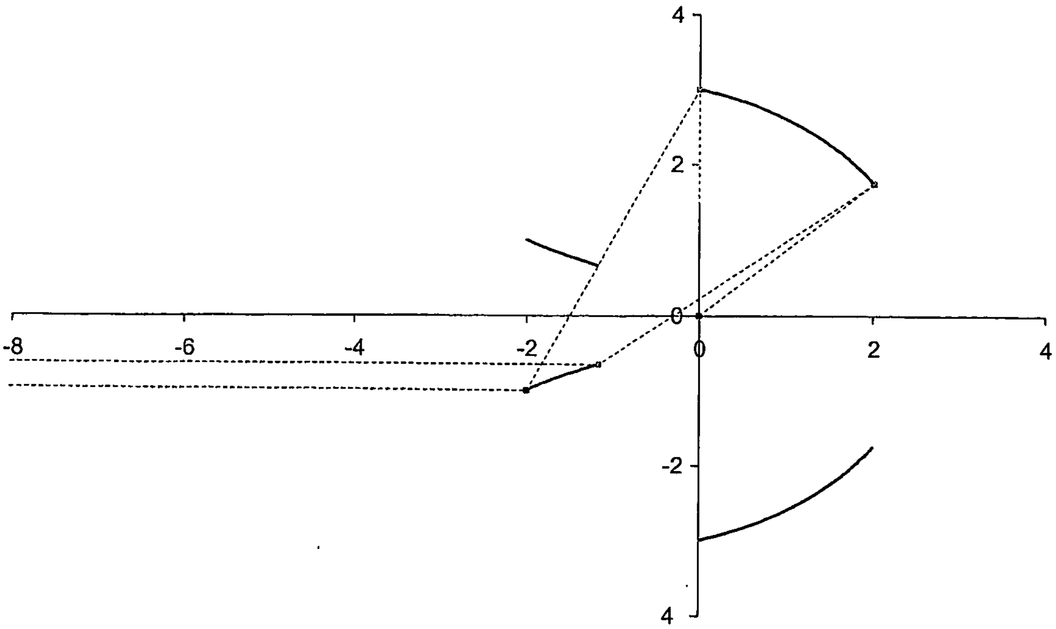

Figure 15

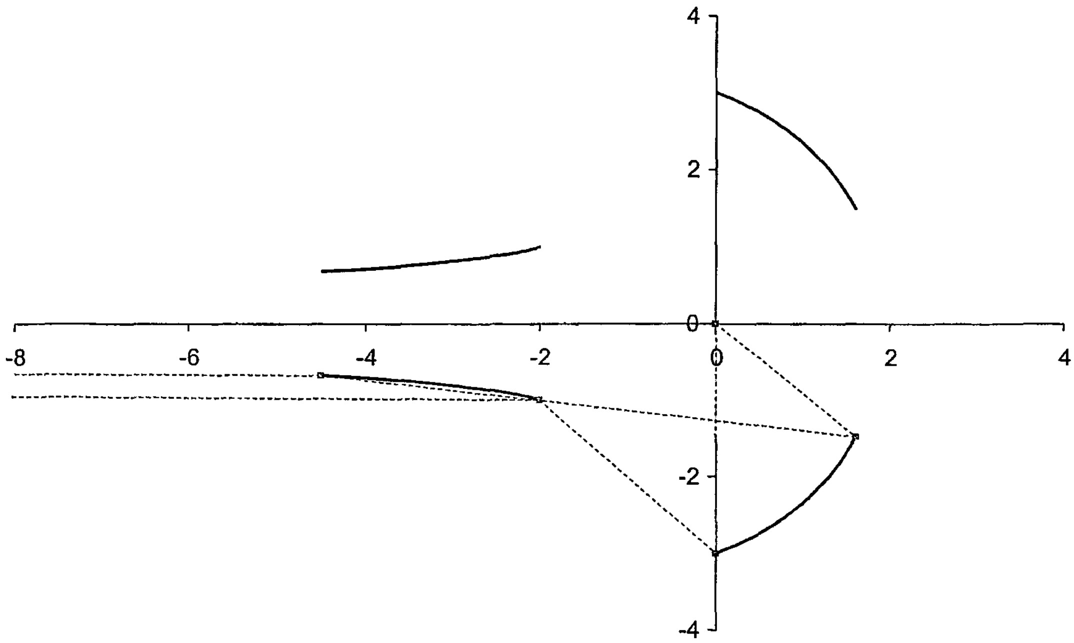


Figure 16

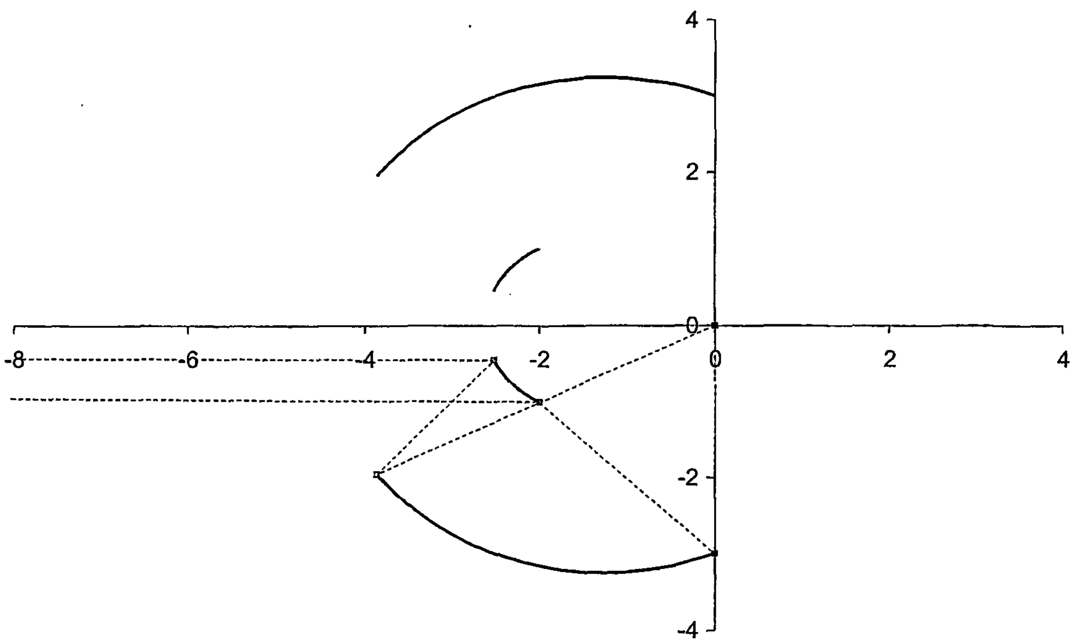

Figure 17

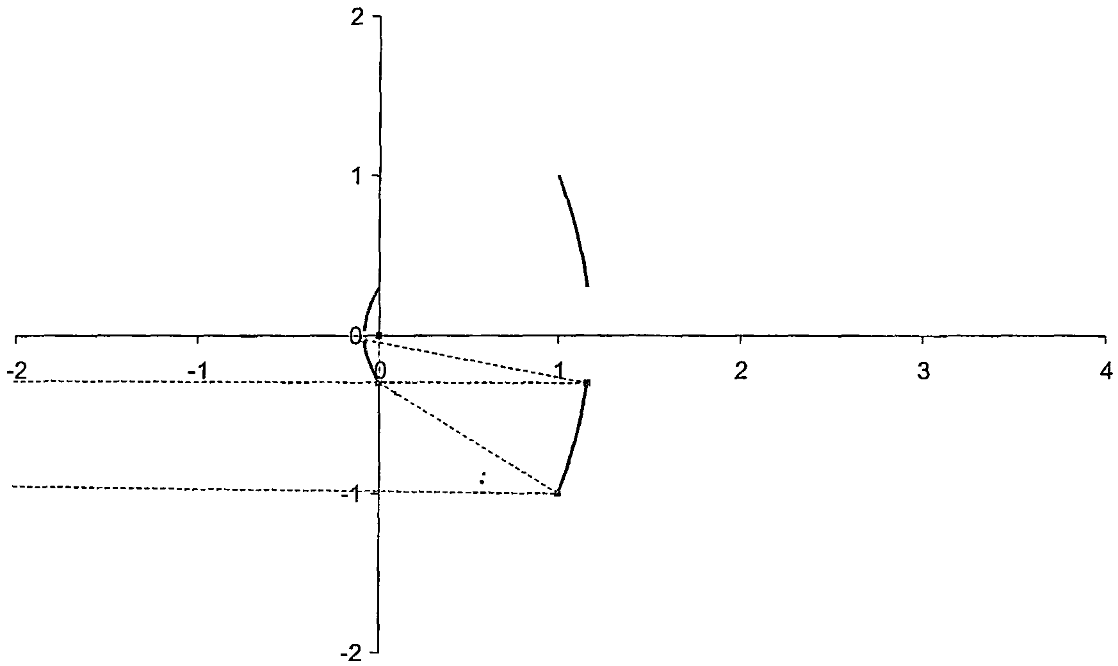

Fig 18

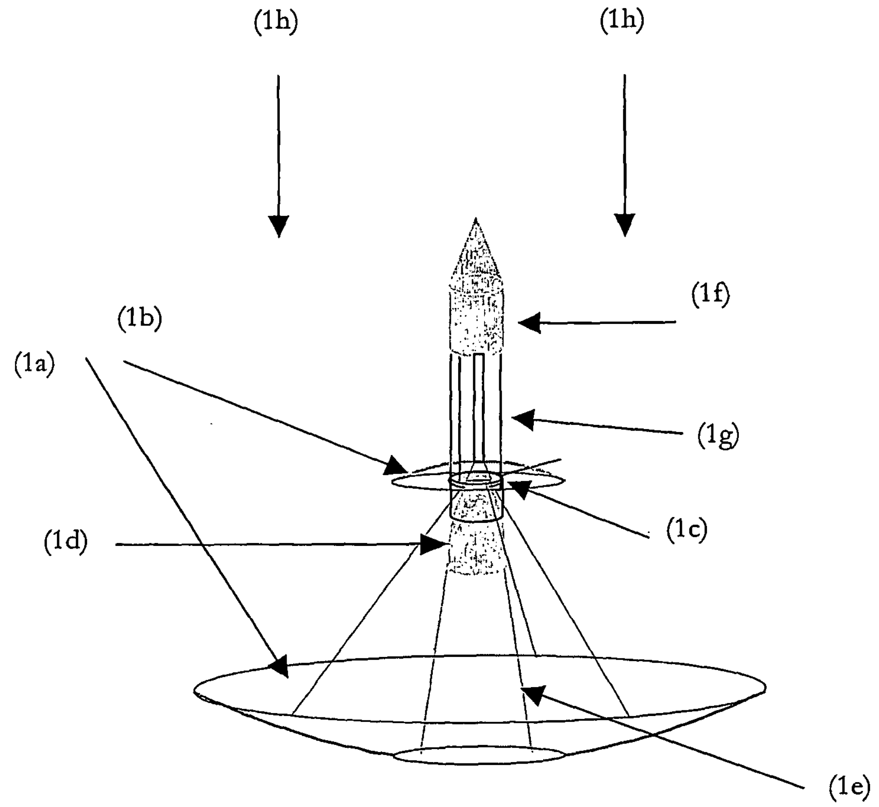


Figure 19

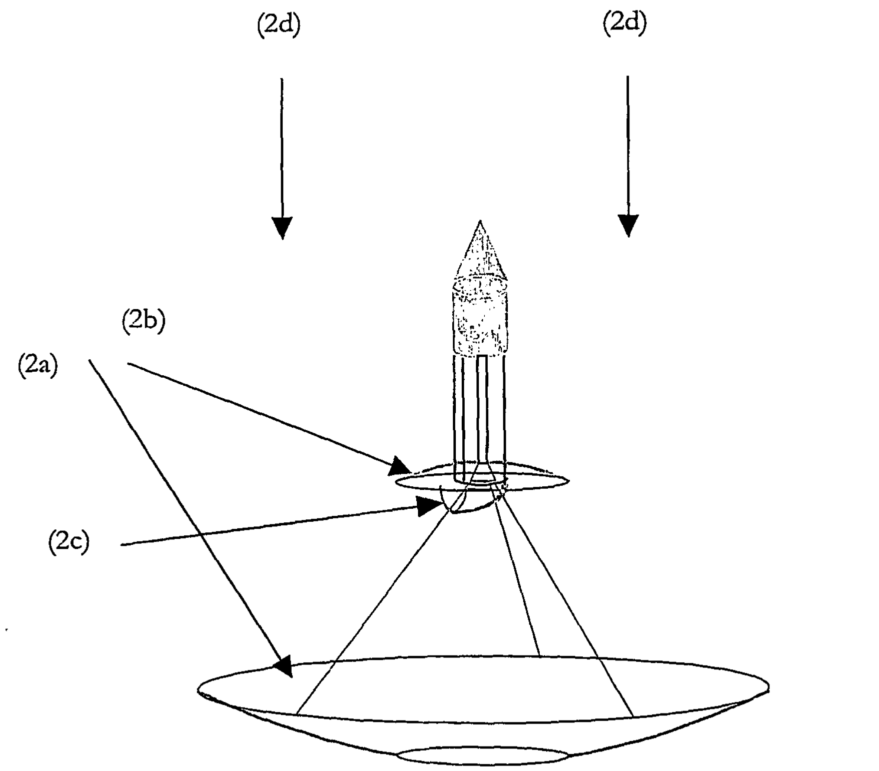

Figure 20

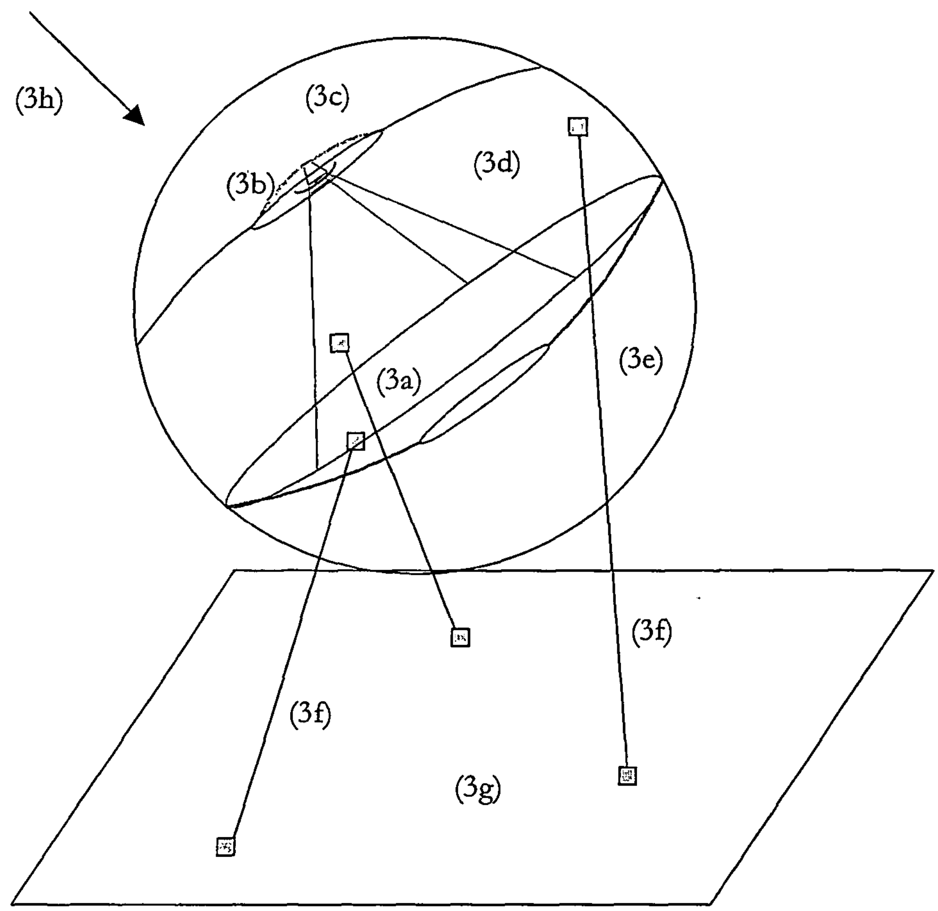

Figure 21
($x$, $y$ and $z$ axes are normalized units of length)

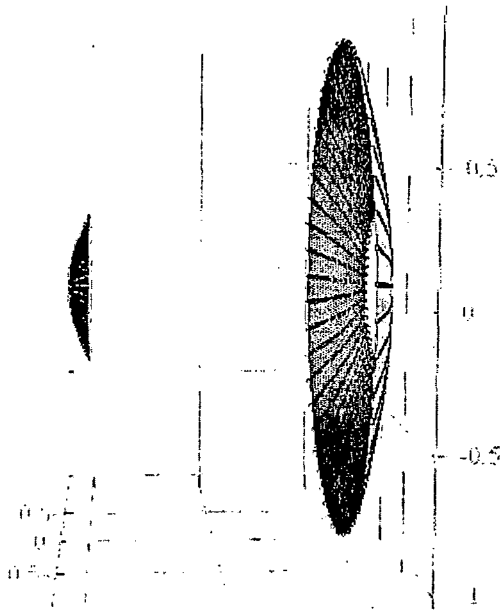

Figure 22
($x$, $y$ and $z$ axes are normalized units of length)

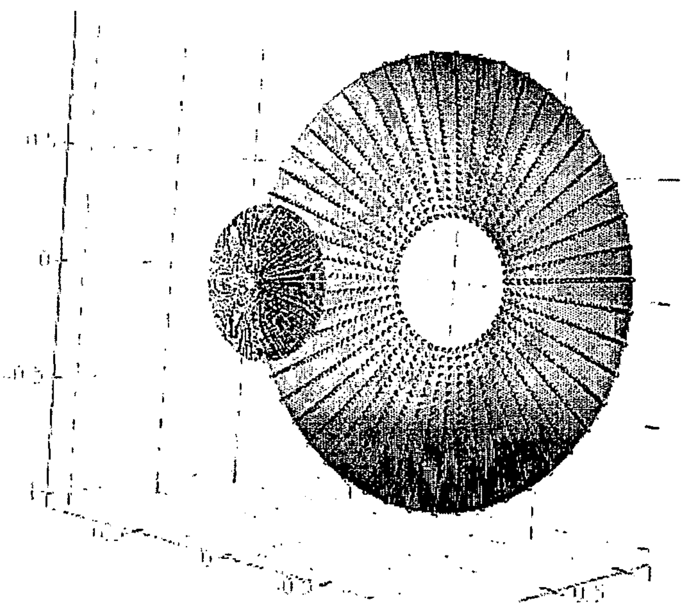

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0169299 A1
- GB 0101161 W
- GB 011161 W
- GB 01B1161 W

### Non-patent literature cited in the description

- Thermionics Quo Vadis? An assessment of the DTRA's Advanced Thermionics Research and Development Program. National Academy Press, 2001